# EUROPEAN PATENT SPECIFICATION

(11) **EP 3 882 118 B1**
(45) Date of publication and mention of the grant of the patent: **02.08.2023**
(21) Application number: 19885740.1
(22) Date of filing: 11.11.2019
(51) Int. Cl.: B62K 25/20, B62K 11/10

(54) **SADDLED VEHICLE**
SATTELFAHRZEUG
VÉHICULE À SELLE

(30) Priority: 12.11.2018 JP 2018212476
(43) Date of publication of application: 22.09.2021
(73) Proprietor: Yamaha Hatsudoki Kabushiki Kaisha, Iwata-shi, Shizuoka 438-8501 (JP)
(72) Inventor: SAITO, Yusuke, Iwata-shi, Shizuoka 438-8501 (JP)
(74) Representative: Grünecker Patent- und Rechtsanwälte PartG mbB
(86) International application number: PCT/JP2019/044204
(87) International publication number: WO 2020/100838

(56) References cited:
- EP-A1- 0 726 197
- EP-A2- 2 797 808
- CN-A- 106 976 518
- JP-A- H11 255 173
- JP-A- 2003 040 183
- JP-A- 2007 326 507
- JP-U- S6 236 984

## Description

The present invention relates to a straddled vehicle according to the preamble of independent claim 1. Such a straddled vehicle can be taken from a specific embodiment as illustrated in the prior art document CN 106 976 518 A.

Patent Literature 1 discloses a scooter-type motorcycle as an example of a straddled vehicle. The motorcycle includes an engine unit vertically swingable with respect to a body frame and a link member interposed between a front end portion of the engine unit and the body frame. A rear wheel is supported by the engine unit.

The link member described in Patent Literature 1 is arranged under the engine. The link member is linked to the body frame via a first pivot axis extending in the right-left direction and linked to the engine via a second pivot axis extending in the right-left direction. The engine unit is vertically swingable with respect to the body frame about the first pivot axis and the second pivot axis.

Also, FIG. 3 of Patent Literature 1 shows a rear suspension. As with a rear portion of the engine unit, the rear suspension is arranged to the left of the rear wheel. FIG. 3 of Patent Literature 1 is drawn to show that the rear suspension is hardly inclined in the front-rear direction and extends from the vicinity of the center of the rear wheel to a seat frame in a vehicle side view. An extended line of the center line of the rear suspension intersects with the road surface directly below the vicinity of the center of the rear wheel in a vehicle side view.

Patent Literature 2 also discloses a scooter-type motorcycle. The motorcycle includes a power unit vertically swingable with respect to a body frame and an engine hanger link interposed between the engine unit and the body frame.

FIG. 6 of Patent Literature 2 shows a damper corresponding to a rear suspension. The damper is arranged to the right of a rear wheel. An upper end portion of the damper is attached to the body frame. A lower end portion of the damper is attached to the engine unit via a muffler support bracket and a cushion bracket. The damper overlaps a fan cover (reference sign 71a) in a vehicle side view. A cooling fan is covered with the fan cover.

### Citation List

### Patent Literature

Patent Literature 1: JP 2017-149165 A
Patent Literature 2: JP H11255173 A

For straddled vehicles such as scooters, users and markets are diversifying, and product development is required to respond to these changes.

It is, however, difficult for the motorcycle described in Patent Literature 1 to extend or vary the functions of a vehicle rear portion and thus not possible to sufficiently accommodate such a need. That is, in the motorcycle described in Patent Literature 1, the upper end of the rear suspension is arranged at a position further to the rear than the front end of the rear wheel in a vehicle side view. The upper end of the rear suspension is also linked to the body frame. With the structure, since the size and/or the arrangement of a storage box are limited by the body frame and the rear suspension, it is difficult to increase the volume of the storage box by extending the storage box outward in the vehicle width direction and to decrease the width of the vehicle rear portion, for example. For the same reason, it is also difficult to flexibly change the position of the storage box. Further, since the upper end of the rear suspension is arranged at a high position, the body frame is also arranged at a high position, which further limits the position of installation of a carrier bed and/or a carrier box to be arranged behind the seat.

In the motorcycle described in Patent Literature 1, if the rear suspension is inclined forward, the upper end of the rear suspension moves forward. This mitigates the above-described limits caused by the rear suspension. However, in the motorcycle described in Patent Literature 1, the rear suspension is arranged to the left of the rear wheel, as with the rear portion of the engine unit. An air cleaner box positioned over the engine unit is arranged in front of the rear suspension. In the motorcycle described in Patent Literature 1, since the rear suspension comes into contact with the air cleaner box, it is not possible to incline the rear suspension forward at a large angle and to move the upper end of the rear suspension significantly forward.

In the motorcycle described in Patent Literature 1, if the rear suspension is moved further outward than the air cleaner box in the vehicle width direction, the rear suspension does not come into contact with the air cleaner box even if the rear suspension is inclined forward. This allows the rear suspension to be inclined forward at a large angle and thus the upper end of the rear suspension to be moved significantly forward. However, moving the rear suspension further outward than the air cleaner box in the vehicle width direction results in an increase in the width of the vehicle rear portion.

The motorcycle described in Patent Literature 1 thus has only a low degree of design freedom in the vehicle rear portion. It is therefore difficult to extend or vary functions of a rear portion of the motorcycle described in Patent Literature 1 depending on diversified users and markets.

In the motorcycle described in Patent Literature 2, the damper corresponding to a rear suspension is arranged on the side opposite to the power unit with respect to the rear wheel in the vehicle width direction. That is, the damper is arranged to the right of the rear wheel. In the motorcycle described in Patent Literature 2, since the damper and the power unit are arranged on the opposite sides with respect to the rear wheels, respectively, the damper will not come into contact with the air cleaner box even if the damper is inclined forward at a large angle. Thus, the motorcycle described in Patent Literature 2 does not suffer from the above-described problems related to Patent Literature 1.

On the other hand, in common scooters, a swing unit including an engine is linked to a body frame by an anti-vibration link. The vibration of the engine due to the reciprocation of a piston is absorbed by the anti-vibration link. This reduces the vibration transmitted from the engine to the body frame. The vibration transmitted to the body frame may be reduced without such an anti-vibration link by adjusting a balancer such as a balance weight attached to a crank shaft. However, if the engine has no balancer, it is necessary to provide an anti-vibration link to reduce vibrations of the body frame.

In the motorcycle shown in FIG. 6 of Patent Literature 2, the rear suspension is inclined forward at a relatively large angle. As described below, if the rear suspension has a large inclination angle, the vibration reduction effect of the engine hanger link corresponding to an anti-vibration link is impaired and the ride comfort for the rider deteriorates. To address this problem, the motorcycle shown in FIG. 6 of Patent Literature 2 employs a long-stroke elongated rear suspension.

However, in the case of laying out such an elongated rear suspension around the engine, the layout of the rear suspension is limited, and an interference problem occurs in which the rear suspension comes into contact with peripheral parts. In the motorcycle shown in FIG. 6 of Patent Literature 2, the rear suspension is arranged on the outside of a shroud (fan cover in Patent Literature 2) that is arranged outermost of the engine in the vehicle width direction to overcome the interference problem and the layout limitation. With this configuration, however, the motorcycle has an increased size in the vehicle width direction.

In addition, no seat for the rider is drawn in FIG. 6 of Patent Literature 2. Thus, for the motorcycle shown in FIG. 6 of Patent Literature 2, it is not clear whether or not an extended line of the center line of the damper intersects with the seating surface of the seat in a vehicle side view. No such a structure is disclosed in the description of Patent Literature 2. If the extended line of the center line of the damper does not intersect with the seating surface of the seat in a vehicle side view, the expansion and contraction of the damper is less likely to be transmitted directly to the rider, which will not lead to an improvement in the ride comfort for the rider, as described below.

Hence, it is the object of the present invention to provide a straddled vehicle able to increase the degree of design freedom in a vehicle rear portion while ensuring a vibration reduction effect by an anti-vibration link. According to the present invention said object is solved by a straddled vehicle having the features of independent claim 1. Preferred embodiments are laid down in the dependent claims.

A preferred embodiment of the present invention provides a straddled vehicle including a body frame, a rear wheel in contact with a road surface, a seat including a seating surface to be in contact with a rider, a swing unit including an engine that includes a crank shaft rotatable about a rotation axis and a transmission mechanism at least partially arranged to the right or left of the rear wheel and arranged to transmit power of the engine to the rear wheel, the swing unit vertically swingable with respect to the body frame and supporting the rear wheel, a rotor rotatable together with the crank shaft about the rotation axis of the crank shaft, an anti-vibration link arranged under the engine and linking the swing unit to the body frame so that the swing unit is vertically swingable with respect to the body frame, and a rear suspension including an upper mount bracket linked to the body frame and a lower mount bracket arranged at a position further to the rear than the upper mount bracket and linked to the swing unit, in which the rear suspension is arranged on a side opposite to the transmission mechanism with respect to the rear wheel in a vehicle width direction, the upper mount bracket of the rear suspension is arranged at a position further to the front than a front end of the rear wheel in a vehicle side view, an extended line of a center line of the rear suspension intersects with the road surface at a position further to the rear than the front end of the rear wheel and further to the front than a rear end of the rear wheel in a vehicle side view, an extended line of the center line of the rear suspension intersects with the seating surface of the seat in a vehicle side view, and at least a portion of the rear suspension is arranged above the rotor and overlaps the rotor in a vehicle plan view.

According to this configuration, the swing unit including the engine and the transmission mechanism is linked to the body frame via the anti-vibration link. The rear wheel is supported by the swing unit. The rear wheel and the swing unit are vertically swingable with respect to the body frame. The upper mount bracket of the rear suspension is linked to the body frame, while the lower mount bracket of the rear suspension is linked to the swing unit. The vibration of the swing unit is absorbed by the rear suspension.

The transmission mechanism is at least partially arranged to the right or left of the rear wheel, while the rear suspension is arranged on the side opposite to the transmission mechanism with respect to the rear wheel in the vehicle width direction. The arrangement and/or angle of the rear suspension is thus less likely to be limited by the transmission mechanism. This increases the degree of freedom in the arrangement and/or angle of the rear suspension, whereby the upper mount bracket of the rear suspension is able to be arranged at a position further to the front than the front end of the rear wheel. As a result, the upper end of the rear suspension is moved forward.

Since the upper end of the rear suspension is thus moved forward compared with conventional straddled vehicles, the structure of the vehicle rear portion (the rear portion of the straddled vehicle) is less likely to be limited by the rear suspension. In other words, the vehicle rear portion has an increased degree of design freedom compared with conventional straddled vehicles. It is therefore possible to flexibly extend or vary the functions of the vehicle rear portion depending on diversified users and markets. For example, the size and arrangement of the storage box is able to be varied depending on such users and markets. In the case where a carrier bed or a carrier box is provided at the vehicle rear portion, the height of the carrier bed, etc., is less likely to be limited by the rear suspension, and the carrier bed, etc., is able to have a lowered position. This allows to provide a straddled vehicle that meets user preferences and market demands.

On the other hand, the extended line of the center line of the rear suspension intersects with the road surface at a position further to the rear than the front end of the rear wheel and further to the front than the rear end of the rear wheel in a vehicle side view. In addition, the extended line intersects with the seating surface of the seat in a vehicle side view. In this case, the inclination angle of the rear suspension with respect to the horizontal plane increases and thus the horizontal reaction force acting on the anti-vibration link decreases, as described below. It is therefore possible to increase the degree of design freedom in the vehicle rear portion while ensuring a vibration reduction effect by the anti-vibration link.

Further, since the upper end of the rear suspension is moved forward, the displacement transmission path from the rear suspension to the seat is shortened. That is, if the upper end of the rear suspension is arranged rearward, the body frame occupies an increased range of the transmission path. The respective portions forming the transmission path undergo elastic deformation. If the total amount of elastic deformation in the transmission path is large, the time until expansion and contraction of the rear suspension is reflected in the seat increases. Thus, the expansion and contraction of the rear suspension is able to be reflected in the seat in a shorter time by shortening the transmission path, which leads to an improvement in the ride comfort for the rider on the seat.

In addition, the extended line of the center line of the rear suspension, which intersects with the seating surface of the seat in a vehicle side view, passes through the body of the rider on the seat in a vehicle side view. Accordingly, the center of gravity of the rider on the seat is on or near the extended line of the center line of the rear suspension. This allows the expansion and contraction of the rear suspension to be transmitted directly to the rider, which can lead to even further improvement in the ride comfort for the rider on the seat.

The rear suspension is also arranged above the rotor, which is rotatable together with the crank shaft about the rotation axis of the crank shaft. At least a portion of the rear suspension overlaps the rotor in a vehicle plan view. If the rear suspension is arranged further outward than the rotor in the vehicle width direction and does not overlap the rotor in a vehicle plan view, the maximum width (the maximum value of the width) of the straddled vehicle increases. Thus, the ride comfort for the rider is improved while preventing an increase in the maximum width.

In the preferred embodiment, at least one of the following features may be added to the straddled vehicle.

The straddled vehicle further includes an axle interposed between the rear wheel and the swing unit and supporting the rear wheel. The lower mount bracket of the rear suspension is arranged at a position further to the front than the axle in a vehicle side view.

According to this configuration, the lower mount bracket of the rear suspension is arranged at a position further to the front than the axle supporting the rear wheel in a vehicle side view. Accordingly, the upper mount bracket of the rear suspension is also arranged at a position further to the front than the axle in a vehicle side view. Since the upper end of the rear suspension is thus moved forward so that the upper mount bracket and the lower mount bracket are arranged at positions further to the front than the axle in a vehicle side view, it is possible to increase the degree of design freedom in the vehicle rear portion.

The straddled vehicle further includes a steering handle to be operated by the rider on the seat and a steering shaft arranged to rotate together with the steering handle. The body frame includes a head pipe in which the steering shaft is inserted. The upper mount bracket of the rear suspension is arranged below a lower end of the head pipe in a vehicle side view.

According to this configuration, the steering shaft, which is arranged to rotate together with the steering handle, is inserted in the head pipe of the body frame. The upper mount bracket of the rear suspension is arranged below the lower end of the head pipe in a vehicle side view. In other words, the upper end of the rear suspension is moved not only forward but also downward. The height of the seat and/or the storage box is therefore less likely to be limited by the rear suspension. This allows for flexible extension and variation of the structure of the vehicle rear portion.

The engine includes a crank case housing the crank shaft therein and arranged in front of the rear wheel. The upper mount bracket of the rear suspension is arranged at a position further to the front than a rear end of the crank case.

According to this configuration, the upper mount bracket of the rear suspension is arranged at a position not only further to the front than the front end of the rear wheel, but also further to the front than the rear end of the crank case housing the crank shaft therein. This allows the upper end of the rear suspension to move further forward while locating the intersection between the extended line of the rear suspension and the road surface within the range of the total length of the rear wheel in a vehicle side view. It is therefore possible to increase the degree of design freedom in the vehicle rear portion while effectively absorbing the vibration of the swing unit with the anti-vibration link.

The lower mount bracket of the rear suspension is arranged at a position further to the rear than the front end of the rear wheel in a vehicle side view.

According to this configuration, the upper mount bracket of the rear suspension is arranged at a position further to the front than the front end of the rear wheel in a vehicle side view, while the lower mount bracket of the rear suspension is arranged at a position further to the rear than the front end of the rear wheel in a vehicle side view. From another point of view, the upper end of the rear suspension is moved forward so that the upper mount bracket is arranged at a position further to the front than the front end of the rear wheel in a vehicle side view, while the lower mount bracket is arranged at a position further to the rear than the front end of the rear wheel in a vehicle side view. It is therefore possible to increase the degree of design freedom in the vehicle rear portion while ensuring a distance from the rear suspension to the anti-vibration link.

The upper mount bracket of the rear suspension is arranged above the rotation axis of the crank shaft in a vehicle side view. At least a portion of the lower mount bracket of the rear suspension is arranged below the rotation axis of the crank shaft in a vehicle side view.

According to this configuration, the upper mount bracket of the rear suspension is arranged above the rotation axis of the crank shaft in a vehicle side view, while the lower mount bracket of the rear suspension is entirely or partially arranged below the rotation axis of the crank shaft in a vehicle side view. In this way, since the position of the rear suspension is lowered, it is possible to lengthen the rear suspension in its axial direction without changing the position of the upper end of the rear suspension. Alternatively, it is possible to lower the position of the upper end of the rear suspension.

The transmission mechanism includes a CVT arranged to transmit power of the engine toward the rear wheel while changing a speed of rotation transmitted from the engine and a CVT case housing the CVT therein. The lower mount bracket of the rear suspension is arranged below an upper surface of the CVT case in a vehicle side view.

According to this configuration, the CVT, which is arranged to transmit the rotation of the engine, is housed in the CVT case. The lower mount bracket of the rear suspension is lowered so that the lower mount bracket is arranged below the upper surface of the CVT case. The rear suspension is thus able to have an increased size in the axial direction without changing the position of the upper end of the rear suspension. Alternatively, the upper end of the rear suspension is able to have a lowered position.

The rear suspension overlaps the rear wheel in a vehicle side view.

According to this configuration, the rear suspension and the rear wheel are arranged in the vehicle width direction and thus the rear suspension overlaps the rear wheel in a vehicle side view. From another point of view, the rear suspension is moved forward within the range where the rear suspension overlaps the rear wheel in a vehicle side view. It is therefore possible to increase the degree of design freedom in the vehicle rear portion while ensuring a distance from the rear suspension to the anti-vibration link.

A rear end of the body frame is arranged at a position further to the front than the rotation center of the rear wheel.

According to this configuration, the body frame has a reduced size in the front-rear direction and the rear end of the body frame is arranged at a position further to the front than the rotation center of the rear wheel. Since the rear end of the body frame is thus moved forward, the structure of the vehicle rear portion is less likely to be limited not only by the rear suspension but also by the body frame. It is therefore possible to further increase the degree of design freedom in the vehicle rear portion.

The straddled vehicle further includes a steering handle to be operated by the rider on the seat and a steering shaft arranged to rotate together with the steering handle. The body frame includes a head pipe in which the steering shaft is inserted. A rear end of the body frame is arranged below a lower end of the head pipe in a vehicle side view.

According to this configuration, the rear end of the body frame has a lowered position and the rear end of the body frame is arranged below the lower end of the head pipe in a vehicle side view. If the rear end of the body frame has a raised position, the seat and/or the carrier bed accordingly have a raised position. If the rear end of the body frame has a lowered position, the height of the seat and/or the carrier bed is less likely to be limited by the rear end of the body frame. It is therefore possible to increase the degree of design freedom in the vehicle rear portion.

The straddled vehicle further includes a rear arm arranged on a side opposite to the transmission mechanism with respect to the rear wheel in the vehicle width direction, supporting the rear wheel, and linked to the swing unit. The rear suspension is linked to the swing unit via the rear arm.

According to this configuration, the rear wheel is arranged between the rear arm and the transmission mechanism in the vehicle width direction. The rear arm is linked to the swing unit. The rear arm extends rearward to at least the axle supporting the rear wheel. The lower mount bracket of the rear suspension is attached to the rear arm. It is therefore possible to arrange the lower mount bracket at any position within the range from the swing unit to the axle.

The anti-vibration link links the swing unit to the body frame so that the swing unit is vertically swingable with respect to the body frame about a horizontal pivot axis that is orthogonal to a front-rear direction. At least a portion of the upper mount bracket of the rear suspension is arranged at a position further to the rear than the pivot axis in a vehicle side view.

According to this configuration, the upper mount bracket is arranged at a position further to the front than the front end of the rear wheel in a vehicle side view, and at least a portion of the upper mount bracket is arranged at a position further to the rear than the pivot axis of the anti-vibration link in a vehicle side view. In this case, if the inclination angle of the rear suspension with respect to the horizontal plane is small, the extended line of the center line of the rear suspension does not intersect with the seating surface of the seat in a vehicle side view. Thus, it is possible to increase the inclination angle of the rear suspension with respect to the horizontal plane and thus to effectively reduce the vertical vibration of the body frame.

At least a portion of the upper mount bracket of the rear suspension is arranged at a position further to the rear than the rotation axis of the crank shaft in a vehicle side view.

According to this configuration, the upper mount bracket is arranged at a position further to the front than the front end of the rear wheel in a vehicle side view, and at least a portion of the upper mount bracket is arranged at a position further to the rear than the rotation axis of the crank shaft in a vehicle side view. In this case, if the inclination angle of the rear suspension with respect to the horizontal plane is small, the extended line of the center line of the rear suspension does not intersect with the seating surface of the seat in a vehicle side view. Thus, it is possible to increase the inclination angle of the rear suspension with respect to the horizontal plane and thus to effectively reduce the vertical vibration of the body frame.

The straddled vehicle further includes a shroud arranged further outward than the rotor in the vehicle width direction and overlapping at least a portion of the rotor in a vehicle side view. The rear suspension does not overlap the shroud in a vehicle side view.

According to this configuration, the shroud is arranged further outward than the rotor in the vehicle width direction and overlaps at least a portion of the rotor in a vehicle side view. The rear suspension does not overlap the shroud in a vehicle side view. In other words, no portion of the rear suspension is arranged outward of the shroud in the vehicle width direction and thus the rear suspension and the shroud are not arranged in the vehicle width direction. It is therefore possible to prevent the straddled vehicle from having an increased maximum width.

The straddled vehicle further includes a flat surface extending from a right end of the straddled vehicle to a left end of the straddled vehicle in the vehicle width direction, on which the feet of the rider on the seat are to be placed.

According to this configuration, the flat surface on which the feet of the rider are to be placed is provided for the straddled vehicle. The flat surface extends from the right end of the straddled vehicle to the left end of the straddled vehicle in the vehicle width direction. In this case, an underbone frame is used as the body frame. In general, it is difficult for the underbone frame to ensure rigidity and it tends to easily bend when a load is applied to it from the front of the straddled vehicle, as compared to other types of body frames such as a cradle frame used in sport-type motorcycles. Even with such a body frame, it is possible to effectively reduce the vibration to be transmitted to the rider with the rear suspension, as described above, and thus to minimize the deterioration in the ride comfort due to bending of the body frame.

### Advantageous Effects of Invention

According to the present invention, it is possible to provide a straddled vehicle able to increase the degree of design freedom in a vehicle rear portion while ensuring a vibration reduction effect by an anti-vibration link.

### BRIEF DESCRIPTION OF THE DRAWINGS

FIG. 1 is a left side view of a straddled vehicle according to a preferred embodiment of the present invention.
FIG. 2 is a left side view of the straddled vehicle with an exterior cover, a seat, and a storage box detached.
FIG. 3 is a plan view of the straddled vehicle with the exterior cover, the seat, and the storage box detached.
FIG. 4 is a right side view of the straddled vehicle with the exterior cover, the seat, and the storage box detached.
FIG. 5 is a cross-sectional view showing the interior of a swing unit.
FIG. 6A is a schematic view of an anti-vibration link when viewed upward.
FIG. 6B is a cross-sectional view of the anti-vibration link taken along the section line VIB-VIB shown in FIG. 6A.
FIG. 6C is a cross-sectional view of the anti-vibration link taken along the section line VIC-VIC shown in FIG. 6A.
FIG. 7 is a right side view of a rear portion of the straddled vehicle with the exterior cover, the seat, and the storage box detached.
FIG. 8 is a plan view of the rear portion of the straddled vehicle with the exterior cover, the seat, and the storage box detached.
FIG. 9 is a right side view of the rear portion of the straddled vehicle in which, in addition to the exterior cover, the seat, and the storage box, a rear suspension and an exhaust system are detached.
FIG. 10 is a right side view of the rear portion of the straddled vehicle with the exterior cover, the seat, and the storage box detached.
FIG. 11 is a plan view of the rear portion of the straddled vehicle in which, in addition to the exterior cover, the seat, and the storage box, an air cleaner box is detached.
FIG. 12 is a cross-sectional view showing the interior of the rear suspension.
FIG. 13 is a cross-sectional view showing the interior of a hydraulic damper provided at the rear suspension.
FIG. 14 is a right side view for describing the inclination angle of the rear suspension.
FIG. 15 is a schematic view for describing the reaction force of the rear suspension.

### DETAILED DESCRIPTION OF THE PREFERRED EMBODIMENTS

Hereinafter, the preferred embodiments of the present invention will be described in detail referring to the attached drawings.

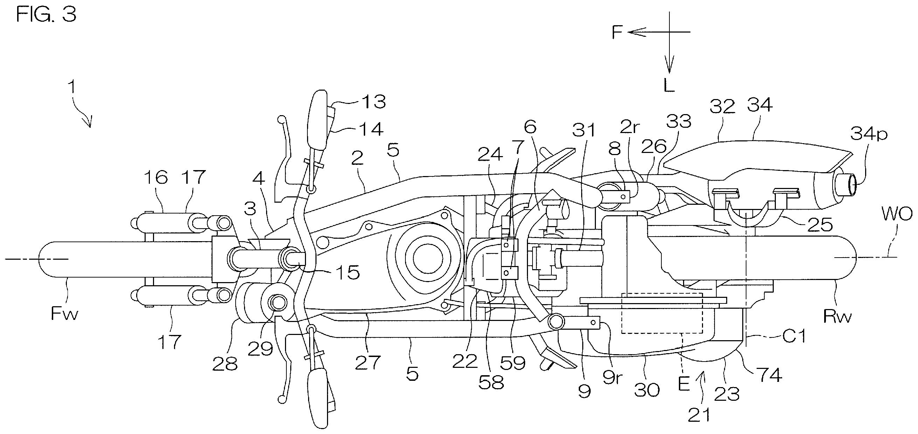

A straddled vehicle 1 in a reference posture placed on a horizontal road surface Rs will be hereinafter described unless specific notice is given. The reference posture is a posture in which a steering handle 14 is disposed at a straight-traveling position (a position of the steering handle 14 shown in FIG. 3) at which the straddled vehicle 1 travels straight and a rotational center C1 of a rear wheel Rw is horizontal.

Front-rear, up-down, and right-left directions in the following description are defined based on the straddled vehicle 1 in the reference posture. The right-left direction corresponds to a vehicle width direction. A vehicle center WO corresponds to a vertical plane that passes through a center line of a head pipe 3 and that is perpendicular to the rotational center C1 of the rear wheel Rw. A plan view and a side view in the following description mean a plan view and a side view of the straddled vehicle 1, respectively unless specific notice is given. The term "upper end" in the following description means an uppermost portion of a member. That is, the term "upper end" means an uppermost end. The same applies to the lower end, front end, rear end, right end, left end, outer end, and inner end.

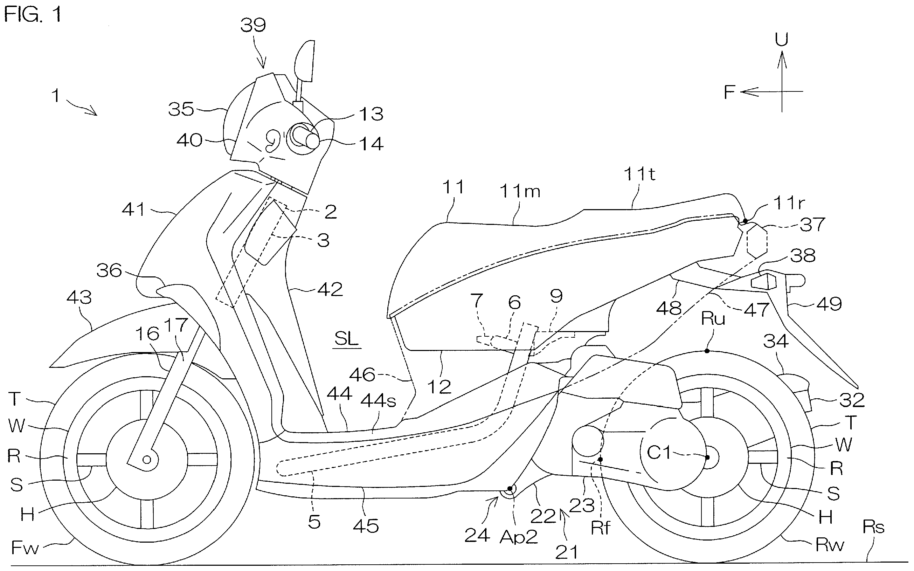

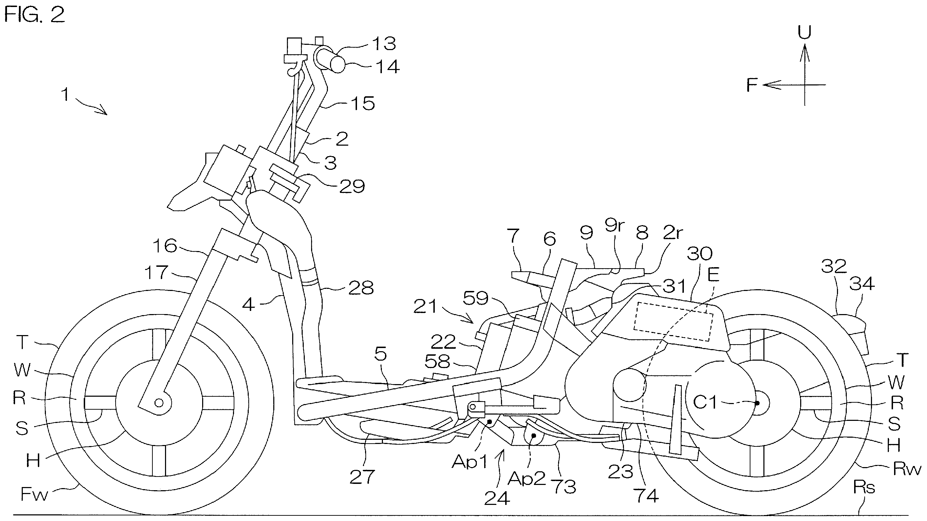

FIG. 1 is a left side view of the straddled vehicle 1 according to a preferred embodiment of the present invention. FIG. 2, FIG. 3, and FIG. 4 are, respectively, a left side view, a plan view, and a right side view of the straddled vehicle 1 with an exterior cover 39, a seat 11, and a storage box 12 detached. The arrows U and F in FIG. 1 indicate the upward direction and the forward direction of the straddled vehicle 1, respectively. The arrow L in FIG. 2 indicate the left direction of the straddled vehicle 1. The same applies to the other drawings.

As shown in FIG. 1, the straddled vehicle 1 is a scooter, for example. The straddled vehicle 1 includes the body frame 2 covered with the exterior cover 39. The body frame 2 includes a head pipe 3 extending obliquely rearward and upward. As shown in FIG. 2, the body frame 2 further includes a down frame 4 extending obliquely rearward and downward from the head pipe 3 and a pair of lower frames 5 extending obliquely rearward and upward from the down frame 4. The down frame 4 and the lower frames 5 are hollow metal members, for example. The front end of the pair of lower frames 5 is arranged below the head pipe 3. The pair of lower frames 5 overlap each other in a side view.

As shown in FIG. 1, the straddled vehicle 1 includes a straddled seat 11 for a rider and a storage box 12 arranged under the seat 11. FIG. 1 shows an example in which the seat 11 incudes a main seat 11m for the rider and a tandem seat 11t for a fellow passenger. The seat 11 may be single-seated. The seat 11 and the storage box 12 are arranged behind the head pipe 3. An opening provided at an upper end portion of the storage box 12 is opened and closed by the seat 11. FIG. 1 shows a state where the seat 11 is arranged in a closed position where the opening of the storage box 12 is closed by the seat 11.

The seat 11 is linked to the body frame 2 via the storage box 12. As shown in FIG. 3, the body frame 2 includes a cross member 6 extending from the right lower frame 5 to the left lower frame 5, a pair of front stays 7 extending forward from the cross member 6, and a pair of rear stays (right rear stay 8 and left rear stay 9) extending rearward from the pair of lower frames 5. The storage box 12 is fixed detachably to the front stays 7, the right rear stay 8, and the left rear stay 9 using bolts.

The front stays 7 are arranged at a position further to the front than the right rear stay 8 and the left rear stay 9. The gap between the pair of front stays 7 in the vehicle width direction is narrower than the gap between the right rear stay 8 and the left rear stay 9 in the vehicle width direction. The front stays 7 are arranged further inward than the right rear stay 8 and the left rear stay 9 in the vehicle width direction. The front stays 7 are arranged in front of the rear wheel Rw in a plan view. The right rear stay 8 and the left rear stay 9 are arranged further outward than the rear wheel Rw in the vehicle width direction.

The right rear stay 8 and the left rear stay 9 are both made of metal, for example. The right rear stay 8 extends rearward from the right lower frame 5 and the left rear stay 9 extends rearward from the left lower frame 5. The rear end 2r of the right rear stay 8 is arranged at a position further to the rear than the rear end 9r of the left rear stay 9. The rear end 2r of the right rear stay 8 corresponds to the rear end 2r of the body frame 2, which is at the rearmost position of the body frame 2. The rear end 2r of the body frame 2 is arranged at a position further to the front than the rotation center C1 of the rear wheel Rw. In contrast, the rear end 11r of the seat 11 is arranged at a position further to the rear than the rotation center C1 of the rear wheel Rw.

As shown in FIG. 2, a steering device 13 to steer the straddled vehicle 1 includes a steering handle 14 to be operated by the rider and a front fork 16 rotatably supporting a front wheel Fw. The front fork 16 as an example of a front wheel support member includes a pair of fork pipes 17 arranged to the right and left of the front wheel Fw and a steering shaft 15 inserted in the head pipe 3. The front wheel Fw includes a rubber tire T that rolls on a road surface Rs and a metal wheel W encircled by the tire T. The wheel W includes an annular rim R encircled by the tire T, an annular hub H encircled by the rim R, and spokes S extending from the hub H to the rim R. The rear wheel Rw also includes the tire T and the wheel W.

The steering shaft 15 protrudes upward from an upper end portion of the head pipe 3. The steering handle 14 is linked to an upper end portion of the steering shaft 15. The steering handle 14 is arranged over the head pipe 3. When the steering handle 14 is operated, the front wheel Fw rotates leftward and rightward about the center line of the head pipe 3 together with the steering handle 14 and the front fork 16. The straddled vehicle 1 is thus steered.

The straddled vehicle 1 includes a swing unit 21 vertically swingable with respect to the body frame 2. The swing unit 21 is an example of a power unit to drive the straddled vehicle 1. The swing unit 21 includes an engine 22 that generates power to rotate the rear wheel Rw and a transmission mechanism 23 that transmits the power of the engine 22 to the rear wheel Rw. The transmission mechanism 23 extends rearward from the engine 22. The rear wheel Rw is supported rotatably by the transmission mechanism 23. The engine 22 is attached to the body frame 2 via an anti-vibration link 24. The rear wheel Rw and the swing unit 21 are vertically swingable with respect to the body frame 2 about horizontal pivot axes Ap1 and Ap2 that pass through the anti-vibration link 24 in the vehicle width direction.

As shown in FIG. 3, the rear wheel Rw is arranged to the right of the swing unit 21. The straddled vehicle 1 includes a rear arm 25 arranged to the right of the rear wheel Rw and a rear suspension 26 that absorbs the vibration of the swing unit 21. The rear wheel Rw is arranged between the swing unit 21 and the rear arm 25 in the vehicle width direction. The rear wheel Rw is supported rotatably by the swing unit 21 and the rear arm 25.

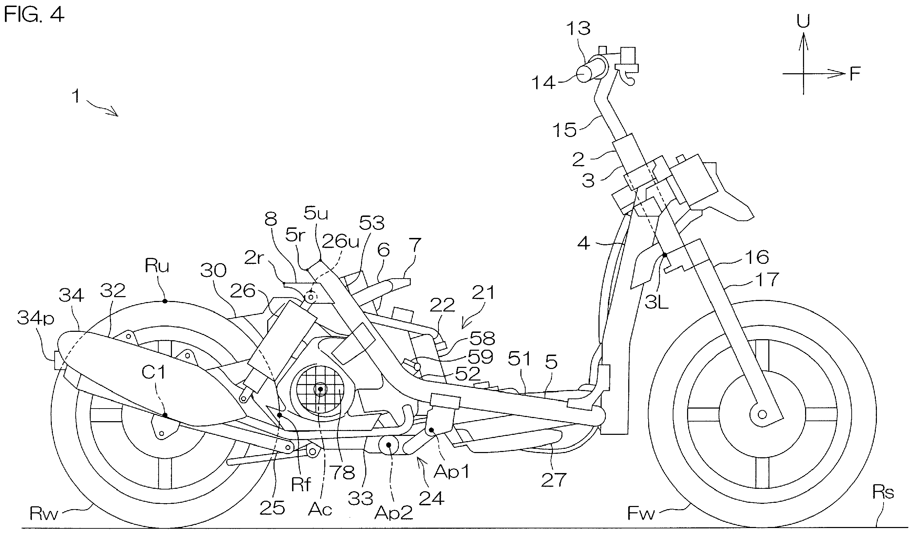

As shown in FIG. 4, an upper end portion of the rear suspension 26 is attached to the body frame 2 and a lower end portion of the rear suspension 26 is attached to the swing unit 21 via the rear arm 25. The rear suspension 26 is arranged further to the right than the rear wheel Rw. The rear suspension 26 is therefore arranged on the side opposite to the transmission mechanism 23 with respect to the rear wheel Rw.

The number of rear suspensions 26 included in the straddled vehicle 1 is one. In other words, only the single rear suspension 26 is provided for the straddled vehicle 1. The rear suspension 26 overlaps the rear wheel Rw in a side view. The rear suspension 26 is entirely arranged at a position further to the front than the rotation center C1 of the rear wheel Rw. The rear suspension 26 is arranged under the storage box 12 in a side view. No portion of the rear suspension 26 overlaps the storage box 12 in a side view. At least a portion of the rear suspension 26 may overlap the storage box 12 in a side view.

As shown in FIG. 2, the straddled vehicle 1 includes a fuel tank 27 that stores fuel to be supplied to the engine 22. The fuel tank 27 is attached to the body frame 2. The fuel tank 27 is arranged under a foot board 44 (refer to FIG. 1) described below. The fuel tank 27 may be arranged at a position other than the space under the foot board 44. The fuel tank 27 is arranged between the pair of lower frames 5 in the vehicle width direction. The fuel tank 27 is arranged in front of the engine 22 in a plan view. A filler cap 29 to open and close the fuel inlet is arranged outward of the head pipe 3 in the vehicle width direction. Fuel that has flowed through the fuel inlet is guided into the fuel tank 27 by a fuel piping 28 extending upward from the fuel tank 27.

As shown in FIG. 3, the straddled vehicle 1 includes an air cleaner box 30 housing therein an element E arranged to remove foreign matter from air to be supplied to the engine 22 and an intake pipe 31 arranged to guide air from the air cleaner box 30 to the engine 22. The straddled vehicle 1 further includes an exhaust system 32 arranged to emit exhaust gas generated in the engine 22 to the atmosphere. The exhaust system 32 includes an exhaust pipe 33 arranged to guide exhaust gas emitted from the engine 22 downstream and a silencer 34 arranged to emit exhaust gas guided by the exhaust pipe 33 from an exhaust port 34p opened to the atmosphere.

The air cleaner box 30 is arranged over the transmission mechanism 23. The engine 22 is arranged in front of the air cleaner box 30 in a plan view. The intake pipe 31 extends forward from the air cleaner box 30. As shown in FIG. 4, the exhaust pipe 33 extends rearward from the engine 22. The silencer 34 extends rearward from the exhaust pipe 33. The exhaust pipe 33 and the silencer 34 are arranged to the right of the rear arm 25 and overlap the rear arm 25 in a side view. A front end portion of the exhaust pipe 33 is attached to the engine 22. The silencer 34 is attached to the rear arm 25. The exhaust system 32 is vertically swingable with respect to the body frame 2 together with the rear wheel Rw and the swing unit 21.

As shown in FIG. 1, the straddled vehicle 1 includes a head lamp 35 arranged to emit light forward and two front flashers 36 arranged to flash in response to an operation by the rider. The straddled vehicle 1 further includes a tail lamp 37 arranged to emit light rearward and two rear flashers 38 arranged to flash in response to an operation by the rider. The head lamp 35 and the front flashers 36 are arranged at positions further to the front than the seat 11. The tail lamp 37 and the rear flashers 38 are arranged at positions further to the rear than the front end Rf of the rear wheel Rw.

The exterior cover 39 of the straddled vehicle 1 includes a handle cover 40 arranged in front of and behind the steering handle 14, a front cover 41 arranged in front of the head pipe 3, and a leg shield 42 arranged behind the head pipe 3. The leg shield 42 is arranged between the head pipe 3 and the seat 11 in the front-rear direction. A front fender 43 of the exterior cover 39 is arranged over the front wheel Fw. The front fender 43 is arranged to rotate leftward and rightward together with the front wheel Fw. The handle cover 40 is arranged to rotate leftward and rightward together with the steering handle 14.

The exterior cover 39 includes the foot board 44 arranged over the pair of lower frames 5, a pair of under-side covers 45 arranged, respectively, to the right and left of the pair of lower frames 5, and a lower cover 46 arranged below the seat 11. The lower cover 46 is arranged behind the leg shield 42. The exterior cover 39 forms a leg space SL between the leg shield 42 and the lower cover 46 in the front-rear direction in which the feet and legs of the rider on the seat 11 are placed.

The feet of the rider on the seat 11 are placed on a flat surface 44s provided on the upper surface of the foot board 44. The flat surface 44s extends from the right end of the straddled vehicle 1 to the left end of the straddled vehicle 1 in the vehicle width direction. The flat surface 44s may be an absolutely flat surface without concavo-convex or may be a substantially flat surface provided with recessed portions or convex portions that cannot affect placing feet thereon (e.g., recessed portions or convex portions of 1 to 2 cm or so). When the feet of the rider on the seat 11 are placed on the flat surface 44s, the legs of the rider are placed behind the leg shield 42.

The exterior cover 39 includes a pair of rear side covers 47 arranged, respectively, to the right and left of the storage box 12 and a rear fender 49 arranged over and behind the rear wheel Rw. The rear fender 49 is supported by the storage box 12 via a stay 48 extending rearward from the storage box 12. The rear fender 49 extends downward from the stay 48. The two rear flashers 38 are attached to the rear fender 49. The tail lamp 37 is attached to the body frame 2 via the storage box 12. The tail lamp 37 is arranged behind the storage box 12.

As shown in FIG. 4, the lower frames 5 each include a front frame 51 arranged below the foot board 44 (refer to FIG. 1), a rear frame 53 arranged below the seat 11 (refer to FIG. 1), and a corner frame 52 extending from the front frame 51 to the rear frame 53. The front frame 51 extends obliquely upward and rearward from the down frame 4, and the rear frame 53 extends obliquely upward and rearward from the corner frame 52.

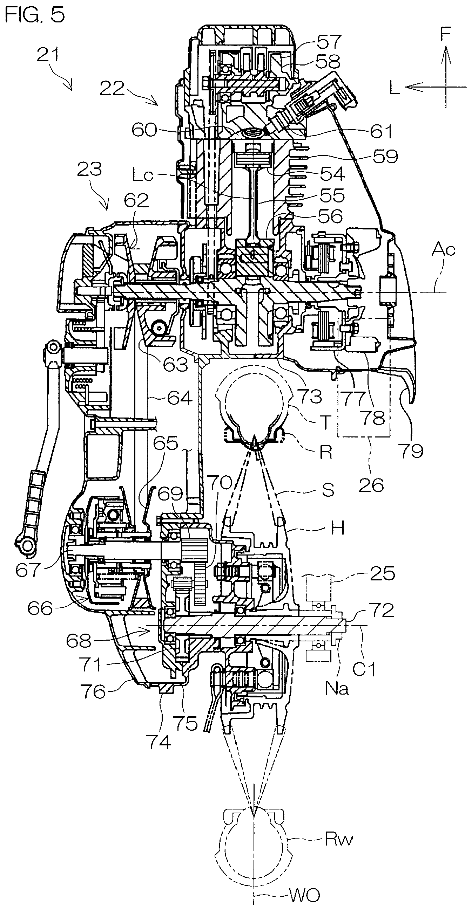

The rear frame 53 overlaps the engine 22 in a side view. The rear frame 53 is arranged in front of the rear suspension 26 in a side view. The rear suspension 26 extends obliquely downward and rearward from the right rear stay 8 fixed to the rear frame 53. The rear frame 53 is inclined rearward in a side view, while the rear suspension 26 is inclined forward in a side view. The rear frame 53 and the rear suspension 26 are spaced apart from each other in the front-rear direction. A cooling fan 78 described below is arranged between the rear frame 53 and the rear suspension 26 in the front-rear direction. As shown in FIG. 3, the rear suspension 26 is arranged above the cooling fan 78 and overlaps the cooling fan 78 in a plan view (refer to also FIG. 5).

As shown in FIG. 4, the exhaust pipe 33 is arranged below the rear frame 53 and the rear suspension 26 in a side view. A front end portion of the exhaust pipe 33 is arranged under the engine 22 in a side view. A rear end portion of the exhaust pipe 33 is arranged under the rear suspension 26 in a side view. The cooling fan 78 is arranged over the exhaust pipe 33 in a side view. The cooling fan 78 is arranged within a triangular space surrounded by the rear frame 53, the rear suspension 26, and the exhaust pipe 33 in a side view.

The upper end of the rear frame 53 corresponds to the upper ends 5u of the lower frames 5. The rear end of the rear frame 53 corresponds to the rear ends 5r of the lower frames 5. The right rear stay 8 extends rearward from the rear frame 53. The rear end 2r of the right rear stay 8 is arranged at a position further to the rear than the rear ends 5r of the lower frames 5. The rear end 2r of the right rear stay 8 corresponds to the rear end 2r of the body frame 2. The rear end 2r of the body frame 2 is arranged below the rear ends 5r of the lower frames 5.

The upper ends 5u of the lower frames 5 are arranged at positions lower than the lower end 3L of the head pipe 3. The upper ends 5u of the lower frames 5 are arranged at positions higher than a cylinder 57 described below. The upper ends 5u of the lower frames 5 are arranged at positions higher than a rotation axis Ac of a crank shaft 55 described below. The rear ends 5r of the lower frames 5 are arranged at positions further to the rear than the rotation axis Ac of the crank shaft 55. The rear ends 5r of the lower frames 5 are arranged at positions higher than the upper end 26u of the rear suspension 26. The rear ends 5r of the lower frames 5 are arranged at positions higher than the upper end Ru of the rear wheel Rw. The rear ends 5r of the lower frames 5 are arranged at positions further to the front than the front end Rf of the rear wheel Rw.

The rear end 2r of the body frame 2 is arranged below the lower end 3L of the head pipe 3. The rear end 2r of the body frame 2 is arranged above the cylinder 57 (refer to FIG. 5). The rear end 2r of the body frame 2 is arranged above the rotation axis Ac of the crank shaft 55. The rear end 2r of the body frame 2 is arranged at a position further to the rear than the rotation axis Ac of the crank shaft 55. The rear end 2r of the body frame 2 is arranged above the upper end Ru of the rear wheel Rw. The rear end 2r of the body frame 2 is arranged at a position further to the front than the rotation center C1 of the rear wheel Rw. The rear end 2r of the body frame 2 is arranged above the upper end 26u of the rear suspension 26.

Next, the swing unit 21 will be described.

FIG. 5 is a cross-sectional view showing the interior of the swing unit 21.

The engine 22 includes a piston 54 arranged to reciprocate in accordance with the combustion of fuel, the cylinder 57 housing the piston 54 therein, a crank shaft 55 arranged to rotate in accordance with the reciprocation of the piston 54, and a connecting rod 56 connecting the piston 54 and the crank shaft 55. FIG. 5 shows an example in which the center line Lc of the cylinder 57 extends in the front-rear direction in a plan view, while the rotation axis Ac of the crank shaft 55 extends in the right-left direction in a plan view. The directions of the center line Lc of the cylinder 57 and the rotation axis Ac of the crank shaft 55 are not limited thereto.

The cylinder 57 includes a cylinder body 59 housing the piston 54 therein and a cylinder head 58 forming a combustion chamber 60 in which an air-fuel mixture is combusted together with the piston 54 and the cylinder body 59. The engine 22 includes a spark plug 61 arranged to ignite the air-fuel mixture within the combustion chamber 60, an intake valve arranged to open and close an intake port that is open at the inner surface of the combustion chamber 60, and an exhaust valve arranged to open and close an exhaust port that is open at the inner surface of the combustion chamber 60. Air is supplied via the intake port into the combustion chamber 60 and exhaust gas is emitted from the combustion chamber 60 via the exhaust port.

The transmission mechanism 23 includes a belt-driven CVT 62 (Continuously Variable Transmission) arranged to transmit rotation toward the rear wheel Rw while continuously changing the speed of the rotation transmitted from the engine 22. The CVT 62 includes a driving pulley 63 arranged to rotate together with the crank shaft 55, a driven pulley 65 arranged behind the driving pulley 63, an endless belt 64 wound around the driving pulley 63 and the driven pulley 65, and a secondary shaft 67 linked to the driven pulley 65 via a centrifugal clutch 66. The rotation of the crank shaft 55 is transmitted to the driven pulley 65 while the speed of the rotation is varied continuously by the driving pulley 63, the endless belt 64, and the driven pulley 65. This causes the rotation of the crank shaft 55 to be transmitted to the secondary shaft 67.

The transmission mechanism 23 further includes reduction gears 68 arranged to transmit rotation toward the rear wheel Rw while reducing the speed of the rotation transmitted from the CVT 62. The reduction gears 68 include a driving gear 69 arranged to rotate together with the secondary shaft 67, a counter gear 70 engaged with the driving gear 69, and a driven gear 71 engaged with the counter gear 70. The rotation of the secondary shaft 67 is transmitted via the driving gear 69 and the counter gear 70 to the driven gear 71. An axle 72 extending in the vehicle width direction is inserted in the driven gear 71 so as to rotate together with the driven gear 71. The axle 72 penetrates the hub H of the rear wheel Rw in the vehicle width direction and fixed to the wheel W of the rear wheel Rw with an axle nut Na. This causes the rotation of the crank shaft 55 to be transmitted to the rear wheel Rw.

The engine 22 includes a crank case 73 housing the crank shaft 55 therein. The transmission mechanism 23 includes a CVT case 74 housing the CVT 62 therein. The centrifugal clutch 66 and the reduction gears 68 are also housed in the CVT case 74. The CVT case 74 includes a main case 75 arranged to the left of the crank case 73 and a side case 76 arranged to the left of the main case 75. The main case 75 and the side case 76 house the CVT 62 therein. The crank case 73 extends rightward from the main case 75. The cylinder body 59 extends forward from the crank case 73.

The axle 72 protrudes from the main case 75 of the CVT case 74 in the vehicle width direction. Both end portions of the axle 72 are supported by the rear arm 25 and the CVT case 74. The rear arm 25 is arranged to the right of the rear wheel Rw. The CVT case 74 is arranged to the left of the rear wheel Rw. The rear wheel Rw is arranged between the rear arm 25 and the CVT case 74 in the vehicle width direction. The rear wheel Rw is supported by the rear arm 25 and the CVT case 74 via the axle 72.

The swing unit 21 includes a generator 77 (e.g., flywheel magneto) arranged to generate electric power in accordance with the rotation of the crank shaft 55, the cooling fan 78 arranged to rotate together with the crank shaft 55, and a shroud 79 housing the generator 77 and the cooling fan 78 therein. The generator 77, the cooling fan 78, and the shroud 79 are arranged on the side opposite to the transmission mechanism 23 with respect to the crank case 73. The generator 77 and the cooling fan 78 are arranged between the crank case 73 and the shroud 79 in the vehicle width direction. The cooling fan 78 is arranged outward of the generator 77 in the vehicle width direction. The generator 77 and the cooling fan 78 surround the crank shaft 55.

Next, the anti-vibration link 24 will be described.

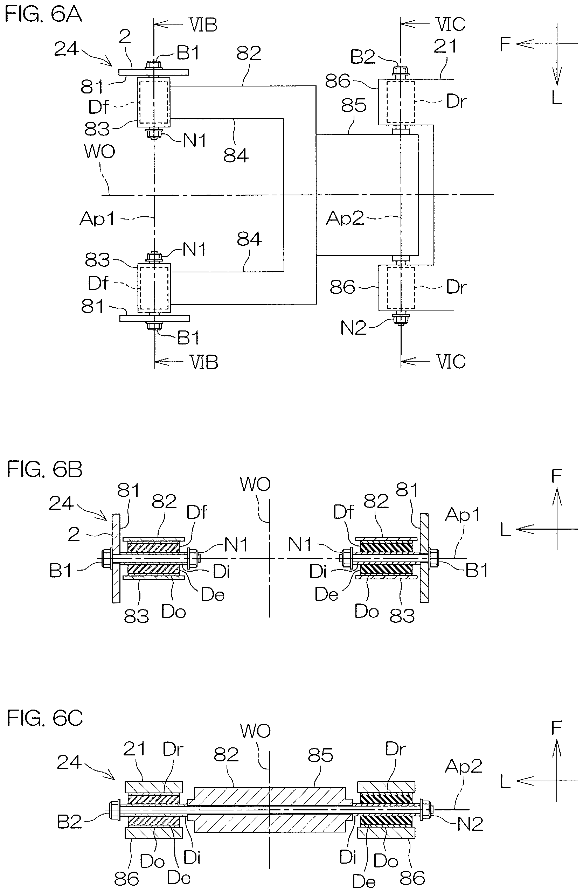

FIG. 6A is a schematic view of the anti-vibration link 24 when viewed upward. FIG. 6B is a cross-sectional view of the anti-vibration link 24 taken along the section line VIB-VIB shown in FIG. 6A. FIG. 6C is a cross-sectional view showing the cross section of the anti-vibration link 24 taken along the section line VIC-VIC shown in FIG. 6A.

As shown in FIG. 6A, the anti-vibration link 24 includes a link member 82 interposed between the body frame 2 and the swing unit 21 and at least one damper unit arranged to absorb the vibration of the swing unit 21. FIG. 6A shows an example in which the anti-vibration link 24 is provided with a pair of front damper units Df interposed between the body frame 2 and the link member 82 and a pair of rear damper units Dr interposed between the link member 82 and the swing unit 21. The link member 82 is linked to the body frame 2 via the pair of front damper units Df and linked to the swing unit 21 via the pair of rear damper units Dr.

The swing unit 21 is swingable with respect to the body frame 2 about a front pivot axis Ap1 extending in the vehicle width direction and swingable with respect to the body frame 2 about a rear pivot axis Ap2 extending in the vehicle width direction. The pair of front damper units Df are arranged on the front pivot axis Ap1. The pair of rear damper units Dr are arranged on the rear pivot axis Ap2. The front pivot axis Ap1 is arranged at a position further to the front than the rear pivot axis Ap2. The front pivot axis Ap1 is arranged above the rear pivot axis Ap2. The front pivot axis Ap1 and the rear pivot axis Ap2 are arranged at positions further to the front than the rotation axis Ac of the crank shaft 55 (refer to FIG. 4). The front pivot axis Ap1 and the rear pivot axis Ap2 are arranged at positions lower than the rotation axis Ac of the crank shaft 55.

The pair of front damper units Df are held on the link member 82. The pair of rear damper units Dr are held on the swing unit 21. The link member 82 includes a pair of front holder portions 83 holding the pair of front damper units Df. The swing unit 21 includes a pair of rear holder portions 86 holding the pair of rear damper units Dr. The pair of front damper units Df may be held on the body frame 2. The pair of rear damper units Dr may be held on the link member 82.

In addition to the pair of front holder portions 83, the link member 82 includes a base portion 85 arranged between the pair of rear holder portions 86 in the vehicle width direction and an arm portion 84 extending from the base portion 85 to the pair of front holder portions 83. The pair of front holder portions 83 of the link member 82 are arranged between a pair of lower stays 81 provided on the body frame 2. The pair of lower stays 81 extend downward, respectively, from the pair of lower frames 5 (refer to FIG. 4). The lower stays 81 are fixed to the lower frames 5.

As shown in FIG. 6B, the front damper units Df each include a cylindrical elastic body De made of rubber or resin, an inner tube Di encircled by the elastic body De, and an outer tube Do encircling the elastic body De. Other damper units such as the rear damper units Dr (an upper damper unit Du and a lower damper unit DL described below) also include an elastic body De, an inner tube Di, and an outer tube Do. The outer peripheral surface of the inner tube Di is coupled to the inner peripheral surface of the elastic body De by adhesion, etc., and the inner peripheral surface of the outer tube Do is coupled to the outer peripheral surface of the elastic body De by adhesion, etc. When a force is applied for relative rotation of the inner tube Di and the outer tube Do, the elastic body De undergoes elastic deformation and thus the inner tube Di and the outer tube Do rotate relatively.

The outer tube Do of the front damper unit Df is inserted in and fixed to the front holder portion 83. The front damper units Df are arranged inward of the lower stays 81 in the vehicle width direction. A bolt B1 penetrates the lower stay 81 in the vehicle width direction and is inserted in the inner tube Di of the front damper unit Df. A nut N1 is arranged inward of the front damper unit Df in the vehicle width direction and is threaded on the bolt B1. The inner tube Di of the front damper unit Df is sandwiched between the bolt B1 and the nut N1 in the vehicle width direction. This causes the inner tube Di of the front damper unit Df to be fixed to the lower stay 81.

As shown in FIG. 6C, the outer tube Do of the rear damper unit Dr is inserted in and fixed to the rear holder portion 86. A bolt B2 penetrates the pair of rear damper units Dr and the base portion 85 of the link member 82 in the vehicle width direction. A nut N2 is threaded on the bolt B2. The inner tubes Di of the pair of rear damper units Dr are sandwiched between the bolt B2 and the nut N2 in the vehicle width direction. The base portion 85 of the link member 82 is sandwiched between the inner tubes Di of the pair of rear damper units Dr in the vehicle width direction. This causes the base portion 85 of the link member 82 to be fixed to the inner tubes Di of the pair of rear damper units Dr.

Next, the air cleaner box 30 and the rear arm 25 will be described.

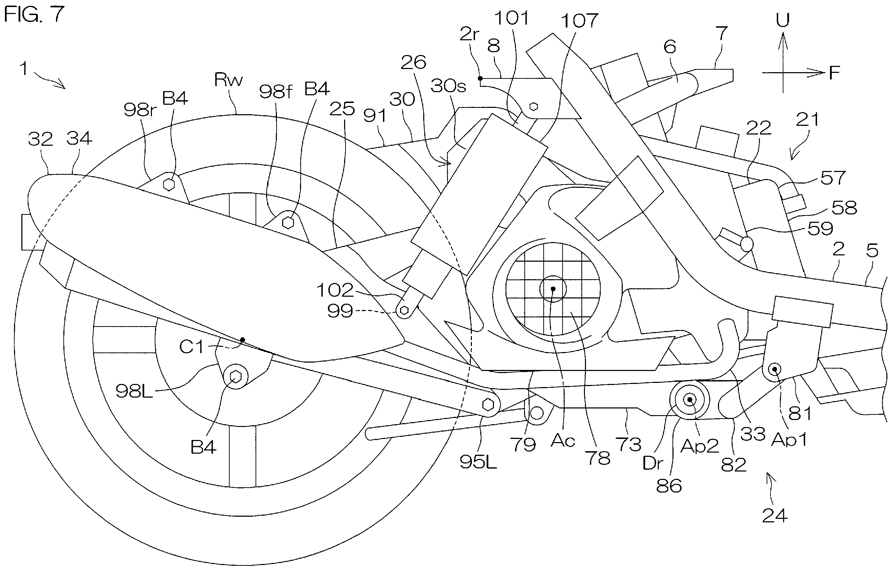

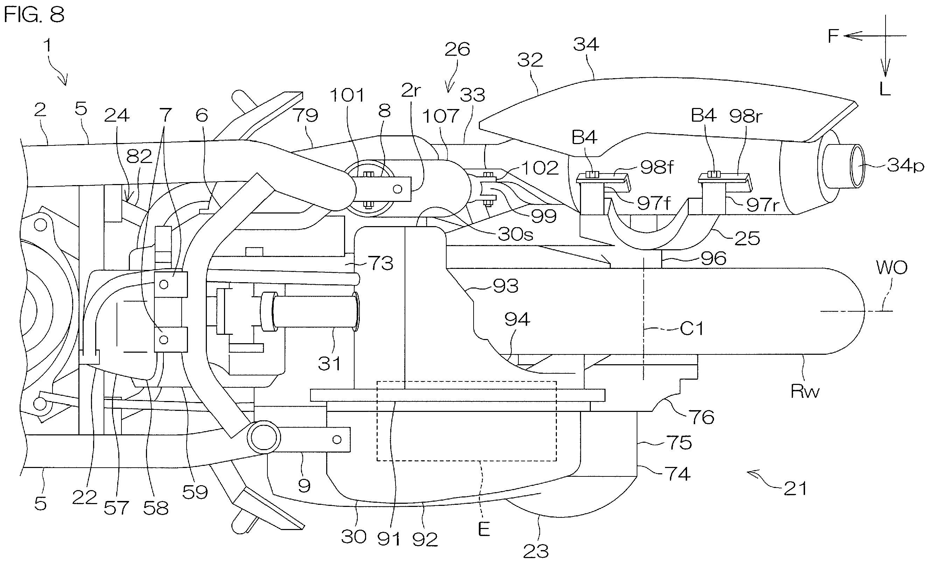

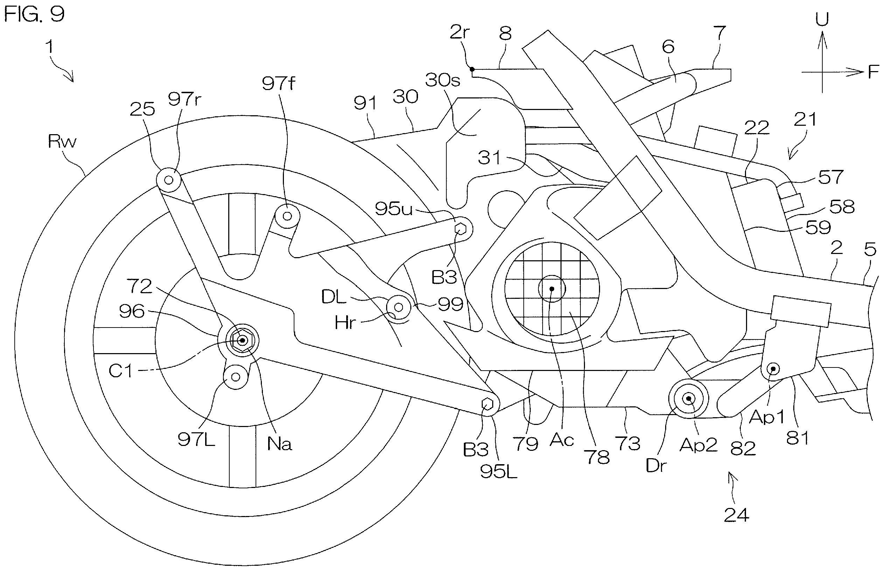

FIG. 7 is a right side view of a rear portion of the straddled vehicle 1 with the exterior cover 39, the seat 11, and the storage box 12 detached. FIG. 8 is a plan view of a rear portion of the straddled vehicle 1 with the exterior cover 39, the seat 11, and the storage box 12 detached. FIG. 9 is a right side view of a rear portion of the straddled vehicle 1 in which, in addition to the exterior cover 39, the seat 11, and the storage box 12, the rear suspension 26 and the exhaust system 32 are detached.

As shown in FIG. 8, the air cleaner box 30 includes a center box 91 and a side box 92 arranged in the vehicle width direction. The center box 91 and the side box 92 house the element E therein. The center box 91 and the side box 92 are arranged at positions further to the front than the rotation center C1 of the rear wheel Rw. The side box 92 is arranged to the left of the center box 91. The side box 92 is arranged over the CVT case 74 and overlaps the CVT case 74 in a plan view.

The center box 91 is arranged behind the cylinder 57 in a plan view. The intake pipe 31 extends forward from the center box 91. The center box 91 is arranged over the CVT case 74 and the rear wheel Rw and overlaps the CVT case 74 and the rear wheel Rw in a plan view. Further, the center box 91 is arranged over the crank case 73 and overlaps the crank case 73 in a plan view.

The air cleaner box 30 includes a front portion 93 arranged in front of the rear wheel Rw and a side portion 94 arranged laterally to the rear wheel Rw. The front portion 93 and the side portion 94 are portions of the center box 91. The side portion 94 is arranged outward of the rear wheel Rw in the vehicle width direction. The side portion 94 is arranged between the rear wheel Rw and the side box 92 in the vehicle width direction. The front portion 93 extends rightward from the side portion 94.

The side surface of the front portion 93 corresponds to the side surface 30s of the air cleaner box 30. The side surface 30s of the air cleaner box 30 is arranged further to the right than the rear wheel Rw. As shown in FIG. 7, the rear suspension 26 is arranged to the right of the air cleaner box 30 and overlaps the side surface 30s of the air cleaner box 30 in a side view.

As shown in FIG. 9, the rear arm 25 extends rearward from the crank case 73. The rear arm 25 is fixed detachably to the crank case 73. The axle 72 is supported by the rear arm 25. The rear arm 25 includes at least one fixed portion fixed to the crank case 73 and an axle support portion 96 supporting the axle 72. FIG. 9 shows an example in which the rear arm 25 is provided with two fixed portions (upper fixed portion 95u and lower fixed portion 95L).

The upper fixed portion 95u and the lower fixed portion 95L are fixed to the crank case 73 using two bolts B3. The upper fixed portion 95u and the lower fixed portion 95L are arranged at positions further to the rear than the rotation axis Ac of the crank shaft 55. The upper fixed portion 95u and the lower fixed portion 95L are arranged at positions further to the front than the rotation center C1 of the rear wheel Rw. The upper fixed portion 95u is arranged above the rotation axis Ac of the crank shaft 55 and the rotation center C1 of the rear wheel Rw. The lower fixed portion 95L is arranged below the rotation axis Ac of the crank shaft 55 and the rotation center C1 of the rear wheel Rw. The upper fixed portion 95u is arranged below the upper end Ru of the rear wheel Rw.

The axle support portion 96 is arranged at a position further to the rear than the upper fixed portion 95u and the lower fixed portion 95L. The axle support portion 96 is arranged to the right of the rear wheel Rw. The axle 72 is inserted in a through hole penetrating the axle support portion 96 in the right-left direction. The axle 72 is supported by the axle support portion 96 via a bearing arranged between the axle 72 and the axle support portion 96. As shown in FIG. 8, the axle support portion 96 is arranged between the rear wheel Rw and the silencer 34 in the vehicle width direction.

The silencer 34 is attached to the rear arm 25. Similarly, the rear suspension 26 is attached to the rear arm 25. The rear arm 25 includes at least one silencer attached portion to which the exhaust system 32 is attached and a suspension attached portion 99 to which the rear suspension 26 is attached. FIG. 9 shows an example in which the rear arm 25 is provided with three silencer attached portions (front silencer attached portion 97f, rear silencer attached portion 97r, and lower silencer attached portion 97L).

As shown in FIG. 8, a front bracket 98f of the silencer 34 is laid on the side surface of the front silencer attached portion 97f of the rear arm 25. A bolt B4 to fix the front bracket 98f to the front silencer attached portion 97f is inserted in a through hole penetrating the front bracket 98f and the front silencer attached portion 97f in the right-left direction. The front bracket 98f is sandwiched laterally between the bolt B4 and the front silencer attached portion 97f. This causes the front bracket 98f to be fixed to the front silencer attached portion 97f. Similarly, a rear bracket 98r of the silencer 34 is fixed to the rear silencer attached portion 97r, and a lower bracket 98L of the silencer 34 is fixed to the lower silencer attached portion 97L.

As shown in FIG. 9, the suspension attached portion 99 is arranged at a position further to the rear than all of the fixed portions (upper fixed portion 95u and lower fixed portion 95L). The suspension attached portion 99 is arranged above the rotation axis Ac of the crank shaft 55 and the rotation center C1 of the rear wheel Rw. The suspension attached portion 99 is arranged at a position further to the front than the axle support portion 96. The suspension attached portion 99 is arranged at a position further to the front than all of the silencer attached portions (front silencer attached portion 97f, rear silencer attached portion 97r, and lower silencer attached portion 97L). The lower damper unit DL is held within the suspension attached portion 99. The rear suspension 26 is attached to the suspension attached portion 99 via the lower damper unit DL.

Next, the rear suspension 26 will be described.

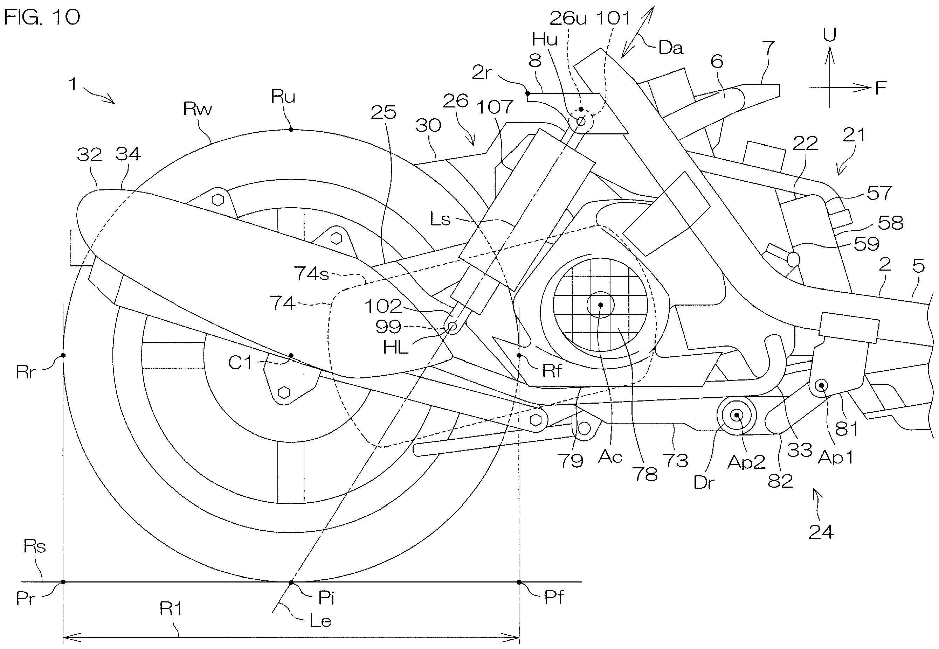

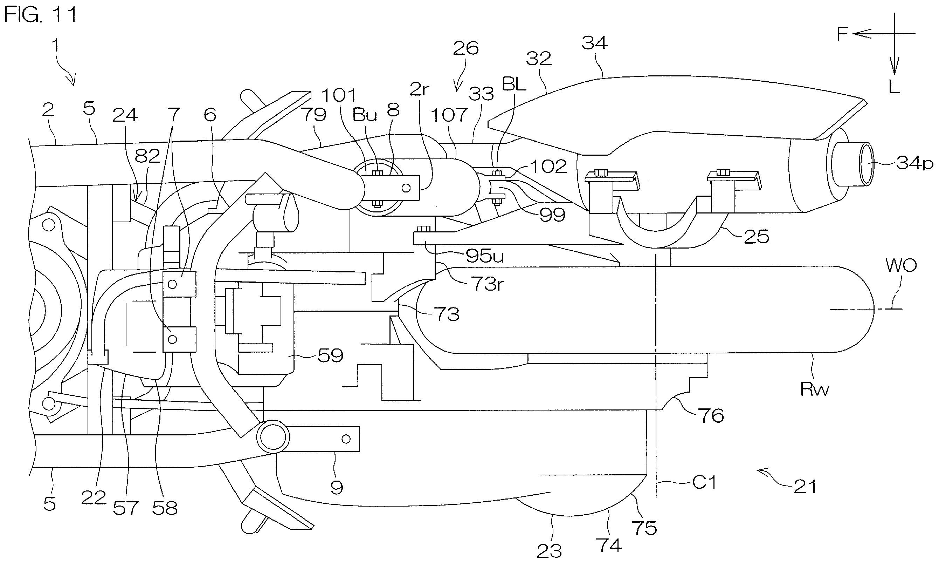

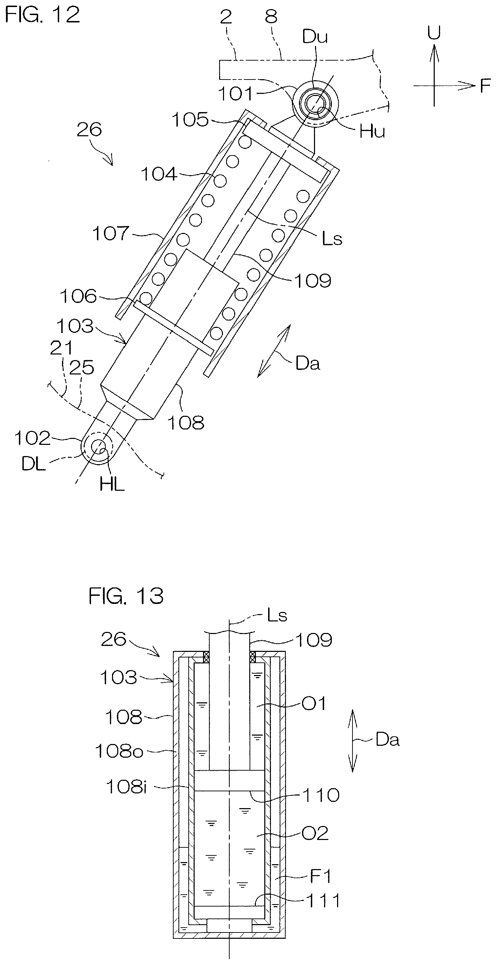

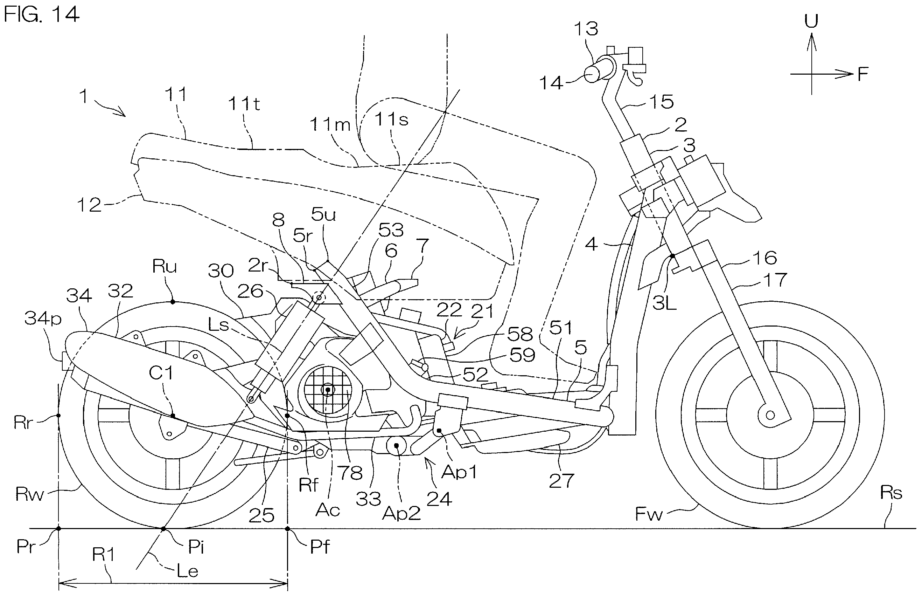

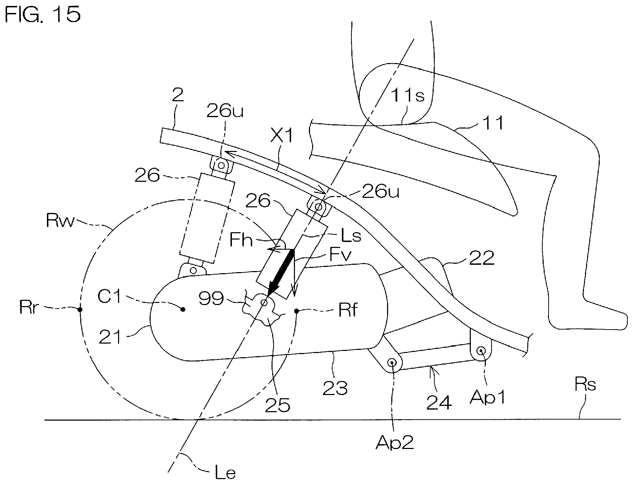

FIG. 10 is a right side view of a rear portion of the straddled vehicle 1 with the exterior cover 39, the seat 11, and the storage box 12 detached. FIG. 11 is a plan view of a rear portion of the straddled vehicle 1 in which, in addition to the exterior cover 39, the seat 11, and the storage box 12, the air cleaner box 30 is detached. FIG. 12 is a cross-sectional view showing the interior of the rear suspension 26. FIG. 13 is a cross-sectional view showing the interior of a hydraulic damper 103 provided at the rear suspension 26. FIG. 14 is a right side view for describing the inclination angle of the rear suspension 26. FIG. 15 is a schematic view for describing the reaction force of the rear suspension 26. In FIG. 10, illustration of the bolt Bu and the bolt BL (refer to FIG. 11) is omitted.

As shown in FIG. 10 and FIG. 11, the rear suspension 26 includes an upper mount bracket 101 attached to the body frame 2 and a lower mount bracket 102 attached to the swing unit 21 via the rear arm 25. As shown in FIG. 12, the rear suspension 26 includes a hydraulic damper 103 arranged between the upper mount bracket 101 and the lower mount bracket 102. The rear suspension 26 further includes a coil spring 104 surrounding the hydraulic damper 103, an upper stopper 105 and a lower stopper 106 supporting the coil spring 104, and a cylindrical suspension cover 107 surrounding the hydraulic damper 103 and the coil spring 104.

The upper mount bracket 101 is linked to an upper end portion of the hydraulic damper 103. The lower mount bracket 102 is linked to a lower end portion of the hydraulic damper 103. The upper stopper 105 is provided on the upper mount bracket 101. The lower stopper 106 is provided on the hydraulic damper 103. The hydraulic damper 103 is inserted in the coil spring 104. The coil spring 104 is sandwiched between the upper stopper 105 and the lower stopper 106 in an axial direction Da of the hydraulic damper 103.

The hydraulic damper 103 is able to expand and contract in the axial direction Da of the hydraulic damper 103. As shown in FIG. 13, the hydraulic damper 103 includes a cylinder tube 108 housing oil therein, a piston valve 110 arranged to move inside the cylinder tube 108 in the axial direction Da of the hydraulic damper 103, and a piston rod 109 protruding from the cylinder tube 108 in the axial direction Da of the hydraulic damper 103 and arranged to move together with the piston valve 110 in the axial direction Da of the hydraulic damper 103. FIG. 13 shows an example in which the hydraulic damper 103 is a twin-tubed damper and the piston rod 109 protrudes upward from the cylinder tube 108. The hydraulic damper 103 may be a mono-tubed damper. The piston rod 109 may protrude downward from the cylinder tube 108.

As shown in FIG. 13, if the hydraulic damper 103 is a twin-tubed damper, the cylinder tube 108 includes an inner cylinder 108i encircling the piston valve 110 and an outer cylinder 108o encircling the inner cylinder 108i. The interior space of the inner cylinder 108i is partitioned by the piston valve 110 into an oil chamber O1 and an oil chamber O2 that are separated from each other in the axial direction Da of the hydraulic damper 103. A fluid chamber F1 formed between the inner cylinder 108i and the outer cylinder 108o is connected to the oil chamber O2 via a base valve 111. The oil chamber O1 and the oil chamber O2 house oil therein and the fluid chamber F1 houses oil and gas (such as nitrogen gas) therein.

Regardless of whether the hydraulic damper 103 is a single-cylinder or a double-cylinder type, the oil chamber O1, the oil chamber O2, and the fluid chamber F1 each form a closed space isolated from the space outside the cylinder tube 108. The fluid (oil or gas) within the cylinder tube 108 is therefore not able to flow out of the cylinder tube 108. The rear suspension 26 includes no reserve tank (also called sub-tank) that is separate from the hydraulic damper 103 and thus it is possible to downsize the rear suspension 26 and decrease the weight of the rear suspension 26.

As shown in FIG. 12, the upper mount bracket 101 is attached to the body frame 2 via the upper damper unit Du. The bolt Bu (refer to FIG. 11) to fix the upper mount bracket 101 to the body frame 2 is inserted in an upper bolt insertion hole Hu penetrating the upper mount bracket 101 in the vehicle width direction. The upper damper unit Du is inserted in the upper bolt insertion hole Hu and held on the upper mount bracket 101. The upper damper unit Du may be held on the body frame 2. The upper mount bracket 101 is rotatable with respect to the body frame 2 about the center line of the upper bolt insertion hole Hu extending in the vehicle width direction.

The lower mount bracket 102 is attached to the rear arm 25 via the lower damper unit DL. The bolt BL (refer to FIG. 11) to fix the lower mount bracket 102 to the rear arm 25 is inserted in a lower bolt insertion hole HL penetrating the lower mount bracket 102 in the vehicle width direction. The lower damper unit DL is held within a holding hole Hr (refer to FIG. 9) that is provided at the rear arm 25. The lower damper unit DL may be held on the lower mount bracket 102. The lower mount bracket 102 is rotatable with respect to the rear arm 25 about the center line of the lower bolt insertion hole HL extending in the vehicle width direction.

As shown in FIG. 10, the upper mount bracket 101 is arranged above the lower mount bracket 102 in a side view. The upper mount bracket 101 is arranged at a position further to the front than the lower mount bracket 102 in a side view. The upper mount bracket 101 and the lower mount bracket 102 are arranged at positions further to the rear than the rotation axis Ac of the crank shaft 55 in a side view. The upper mount bracket 101 is arranged above the rotation axis Ac of the crank shaft 55 in a side view. At least a portion of the lower mount bracket 102 is arranged below the rotation axis Ac of the crank shaft 55 in a side view. The upper mount bracket 101 and the lower mount bracket 102 are arranged at positions further to the rear than the pivot axes Ap1 and Ap2 in a side view. The upper mount bracket 101 and the lower mount bracket 102 are arranged at positions higher than the pivot axes Ap1 and Ap2 in a side view.

The upper mount bracket 101 is arranged above the front end Rf of the rear wheel Rw in a side view. The upper mount bracket 101 is arranged at a position further to the front than the front end Rf of the rear wheel Rw in a side view. The lower mount bracket 102 is arranged at a position further to the rear than the front end Rf of the rear wheel Rw in a side view. The lower mount bracket 102 overlaps the rear wheel Rw in a side view. The upper mount bracket 101 is arranged above the CVT case 74 in a side view. The lower mount bracket 102 overlaps the CVT case 74 in a side view. The lower mount bracket 102 is arranged below the upper surface 74s of the CVT case 74 (refer to FIG. 11) in a side view.

The upper mount bracket 101 is arranged at a position further to the front than the rear end 2r of the body frame 2 in a side view. The lower mount bracket 102 is arranged at a position further to the rear than the rear end 2r of the body frame 2 in a side view. The upper mount bracket 101 and the lower mount bracket 102 are arranged at positions lower than the rear end 2r of the body frame 2 in a side view. The upper mount bracket 101 and the lower mount bracket 102 are arranged at positions lower than the lower end 3L of the head pipe 3 (refer to FIG. 4) in a side view.

As shown in FIG. 11, the upper mount bracket 101 is arranged under the right rear stay 8 and overlaps the right rear stay 8 in a plan view. Similarly, the suspension cover 107 is arranged under the right rear stay 8 and overlaps the right rear stay 8 in a plan view. The rear end 73r of the crank case 73 is arranged at a position further to the rear than the upper mount bracket 101 in a plan view. The lower mount bracket 102 is arranged inward of the exhaust pipe 33 in the vehicle width direction in a plan view.

As shown in FIG. 10, the upper bolt insertion hole Hu is arranged above the lower bolt insertion hole HL in a side view. The upper bolt insertion hole Hu is arranged at a position further to the front than the lower bolt insertion hole HL in a side view. The upper bolt insertion hole Hu and the lower bolt insertion hole HL are arranged at positions further to the rear than the rotation axis Ac of the crank shaft 55 in a side view. The upper bolt insertion hole Hu is arranged above the rotation axis Ac of the crank shaft 55 in a side view. The lower bolt insertion hole HL is arranged below the rotation axis Ac of the crank shaft 55 in a side view. The upper bolt insertion hole Hu and the lower bolt insertion hole HL are arranged at positions further to the rear than the pivot axes Ap1 and Ap2 in a side view. The upper bolt insertion hole Hu and the lower bolt insertion hole HL are arranged at positions higher than the pivot axes Ap1 and Ap2 in a side view.

The upper bolt insertion hole Hu and the lower bolt insertion hole HL are arranged at positions higher than the rotation center C1 of the rear wheel Rw. The upper bolt insertion hole Hu is arranged at a position further to the front than the front end Rf of the rear wheel Rw in a side view. The lower bolt insertion hole HL is arranged at a position further to the rear than the front end Rf of the rear wheel Rw in a side view. The upper bolt insertion hole Hu is arranged at a position further to the front than the rear end 2r of the body frame 2 in a side view. The lower bolt insertion hole HL is arranged at a position further to the rear than the rear end 2r of the body frame 2 in a side view. The upper bolt insertion hole Hu and the lower bolt insertion hole HL are arranged at positions lower than the rear end 2r of the body frame 2 in a side view. The upper bolt insertion hole Hu and the lower bolt insertion hole HL are arranged at positions lower than the lower end 3L of the head pipe 3 (refer to FIG. 4) in a side view.

As shown in FIG. 12, the center line of the hydraulic damper 103 corresponds to the center line Ls of the rear suspension 26. The center line Ls of the rear suspension 26 is inclined forward. As shown in FIG. 14, a straight line passing through all portions of the center line Ls of the rear suspension 26 in a side view is defined as an extended line Le of the rear suspension 26. The extended line Le of the rear suspension 26 corresponds to an extended line of the center line Ls of the rear suspension 26. The center line Ls of the rear suspension 26 is arranged on and included in the extended line Le of the rear suspension 26. The extended line Le of the rear suspension 26 intersects with the road surface Rs at a position (a position of an intersection Pi) further to the rear than the front end Rf of the rear wheel Rw and further to the front than the rear end Rr of the rear wheel Rw in a side view.

As shown in FIG. 14, a range R1 of the total length of the rear wheel Rw is defined as a range from an intersection Pf between a vertical line passing through the front end Rf of the rear wheel Rw and the road surface Rs in a side view to an intersection Pr between a vertical line passing through the rear end Rr of the rear wheel Rw and the road surface Rs in a side view. The intersection Pi between the extended line Le of the rear suspension 26 and the road surface Rs is positioned within the range R1 of the total length of the rear wheel Rw. That is, the position and the inclination angle of the rear suspension 26 are set such that the intersection Pi is positioned within the range R1 of the total length of the rear wheel Rw. Further, the extended line Le of the rear suspension 26 intersects with the seating surface 11s of the seat 11 in contact with the buttocks and thighs of the rider in a side view. FIG. 14 shows an example in which the extended line Le of the rear suspension 26 passes through the body of the rider on the main seat 11m.

As shown in FIG. 15, when the rear suspension 26 is shortened in in its axial direction, the rear suspension 26 generates a reaction force and the reaction force in the axial direction of the rear suspension 26 is applied to the swing unit 21 and the anti-vibration link 24. When the rear suspension 26 is inclined obliquely forward, the reaction force acting on the swing unit 21 is decomposed into a vertical component Fv and a horizontal component Fh. The swing unit 21 and the anti-vibration link 24 are pulled rearward by the horizontal component Fh.

The horizontal reaction force (the horizontal component Fh of the reaction force) increases as the inclination angle of the rear suspension 26 with respect to the horizontal plane decreases. If the horizontal reaction force is large, the swing unit 21 and the anti-vibration link 24 are pulled rearward by the horizontal reaction force. In this case, the swing unit 21 is less likely to swing freely about the pivot axes Ap1 and Ap2. Accordingly, if the horizontal reaction force is large, the vibration reduction effect by the anti-vibration link 24 is impaired and the vibration of the engine 22 is easily transmitted to the body frame 2.

As described above, the extended line Le of the rear suspension 26 intersects with the road surface Rs at a position further to the rear than the front end Rf of the rear wheel Rw and further to the front than the rear end Rr of the rear wheel Rw in a side view. In addition, the extended line Le intersects with the seating surface 11s of the seat 11 in a side view. In this case, the inclination angle of the rear suspension 26 with respect to the horizontal plane increases and thus the horizontal reaction force acting on the anti-vibration link 24 decreases. Thus, it is possible to effectively reduce the vibrations of the rear wheel Rw and the swing unit 21 using the anti-vibration link 24 and the rear suspension 26 without providing a balancer to the engine 22.

Further, since the upper end 26u of the rear suspension 26 is moved forward, the displacement transmission path from the rear suspension 26 to the seat 11 is shortened. That is, like the rear suspension 26 indicated by the alternate long and two short dashes line in FIG. 15, if the upper end 26u of the rear suspension 26 is arranged rearward, the body frame 2 occupies an increased range of the transmission path. In the example shown in FIG. 15, the body frame 2 occupies an increased range indicated by the arrow X.

The displacement of the rear suspension 26 is transmitted to the body frame 2, the storage box 12 (refer to FIG. 14), and the seat 11 in this order. These parts undergo elastic deformation. If the total amount of elastic deformation in the transmission path is large, the time until expansion and contraction of the rear suspension 26 is reflected in the seat 11 increases. Thus, the expansion and contraction of the rear suspension 26 is able to be reflected in the seat 11 in a shorter time by shortening the transmission path, which leads to an improvement in the ride comfort for the rider on the seat 11.

In addition, the extended line Le of the rear suspension 26, which intersects with the seating surface 11s of the seat 11 in a side view, passes through the body of the rider on the seat 11 in a side view. Accordingly, the center of gravity of the rider on the seat 11 is arranged on or near the extended line Le of the rear suspension 26. This allows the expansion and contraction of the rear suspension 26 to be transmitted directly to the rider, which can lead to even further improvement in the ride comfort for the rider on the seat 11.

As described above, in the preferred embodiment, the swing unit 21 including the engine 22 and the transmission mechanism 23 is linked to the body frame 2 via the anti-vibration link 24. The rear wheel Rw is supported by the swing unit 21. The rear wheel Rw and the swing unit 21 are vertically swingable with respect to the body frame 2. The upper mount bracket 101 of the rear suspension 26 is linked to the body frame 2, while the lower mount bracket 102 of the rear suspension 26 is linked to the swing unit 21. The vibration of the swing unit 21 is absorbed by the rear suspension 26.

The transmission mechanism 23 is at least partially arranged to the right or left of the rear wheel Rw, while the rear suspension 26 is arranged on the side opposite to the transmission mechanism 23 with respect to the rear wheel Rw in the vehicle width direction. The arrangement and/or angle of the rear suspension 26 is thus less likely to be limited by the transmission mechanism 23. This increases the degree of freedom in the arrangement and/or angle of the rear suspension 26, whereby the upper mount bracket 101 of the rear suspension 26 is able to be arranged at a position further to the front than the front end Rf of the rear wheel Rw. As a result, the upper end 26u of the rear suspension 26 is moved forward.

Since the upper end 26u of the rear suspension 26 is thus moved forward compared with conventional straddled vehicles, the structure of the vehicle rear portion (the rear portion of the straddled vehicle 1) is less likely to be limited by the rear suspension 26. In other words, the vehicle rear portion has an increased degree of design freedom compared with conventional straddled vehicles. It is therefore possible to flexibly extend or vary the functions of the vehicle rear portion for diversified types of users and markets. For example, the size and/or arrangement of the storage box 12 are able to be varied for such users and markets. In the case where a carrier bed or a carrier box is provided at the vehicle rear portion, the height of the carrier bed, etc., is less likely to be limited by the rear suspension 26, the carrier bed, etc., is able to have a lowered position. This allows to provide a straddled vehicle 1 that meets user preferences and market demands.

Also, the rear suspension 26 is arranged above the cooling fan 78, which is rotatable together with the crank shaft 55 about the rotation axis Ac of the crank shaft 55. At least a portion of the rear suspension 26 overlaps a cooling fan 78 in a plan view. If the rear suspension 26 is arranged further outward than the cooling fan 78 in the vehicle width direction and does not overlap the cooling fan 78 in a plan view, the maximum width (the maximum value of the width) of the straddled vehicle increases. Thus, the ride comfort for the rider is able to be improved while preventing an increase in the maximum width.

In the preferred embodiment, the lower mount bracket 102 of the rear suspension 26 is arranged at a position further to the front than the axle 72 supporting the rear wheel Rw in a side view. Accordingly, the upper mount bracket 101 of the rear suspension 26 is also arranged at a position further to the front than the axle 72 in a side view. Since the upper end 26u of the rear suspension 26 is thus moved forward so that the upper mount bracket 101 and the lower mount bracket 102 are arranged at positions further to the front than the axle 72 in a side view, it is possible to increase the degree of design freedom in the vehicle rear portion.

In the preferred embodiment, the steering shaft 15, which is arranged to rotate together with the steering handle 14, is inserted in the head pipe 3 of the body frame 2. The upper mount bracket 101 of the rear suspension 26 is arranged below the lower end 3L of the head pipe 3 in a side view. In other words, the upper end 26u of the rear suspension 26 is moved not only forward but also downward. The height of the seat 11 and/or the storage box 12 is therefore less likely to be limited by the rear suspension 26. This allows for flexible extension and variation of the structure of the vehicle rear portion.

In the preferred embodiment, the upper mount bracket 101 of the rear suspension 26 is arranged at a position not only further to the front than the front end Rf of the rear wheel Rw, but also further to the front than the rear end 73r of the crank case 73 housing the crank shaft 55 therein. This allows the upper end 26u of the rear suspension 26 to move further forward while locating the intersection Pi between the extended line Le of the rear suspension 26 and the road surface Rs within the range R1 of the total length of the rear wheel Rw in a side view. It is therefore possible to increase the degree of design freedom in the vehicle rear portion while effectively absorbing the vibration of the swing unit 21 with the anti-vibration link 24.

In the preferred embodiment, the upper mount bracket 101 of the rear suspension 26 is arranged at a position further to the front than the front end Rf of the rear wheel Rw in a side view, while the lower mount bracket 102 of the rear suspension 26 is arranged at a position further to the rear than the front end Rf of the rear wheel Rw in a side view. From another point of view, the upper end 26u of the rear suspension 26 is moved forward so that the upper mount bracket 101 is arranged at a position further to the front than the front end Rf of the rear wheel Rw in a side view, while the lower mount bracket 102 is arranged at a position further to the rear than the front end Rf of the rear wheel Rw in a side view. It is therefore possible to increase the degree of design freedom in the vehicle rear portion while ensuring a distance from the rear suspension 26 to the anti-vibration link 24.

In the preferred embodiment, the upper mount bracket 101 of the rear suspension 26 is arranged above the rotation axis Ac of the crank shaft 55 in a side view, while the lower mount bracket 102 of the rear suspension 26 is entirely or partially arranged below the rotation axis Ac of the crank shaft 55 in a side view. In this way, since the position of the rear suspension 26 is lowered, it is possible to lengthen the rear suspension 26 in its axial direction without changing the position of the upper end 26u of the rear suspension 26. Alternatively, it is possible to lower the position of the upper end 26u of the rear suspension 26.

In the preferred embodiment, the CVT 62, which is arranged to transmit the rotation of the engine 22, is housed in the CVT case 74. The lower mount bracket 102 of the rear suspension 26 is lowered so that the lower mount bracket 102 is arranged below the upper surface 74s of the CVT case 74. The rear suspension 26 is thus able to have an increased size in the axial direction without changing the position of the upper end 26u of the rear suspension 26. Alternatively, the upper end 26u of the rear suspension 26 is able to have a lowered position.

In the preferred embodiment, the rear suspension 26 and the rear wheel Rw are arranged in the vehicle width direction and thus the rear suspension 26 overlaps the rear wheel Rw in a side view. From another point of view, the rear suspension 26 is moved forward within the range where the rear suspension 26 overlaps the rear wheel Rw in a side view. It is therefore possible to increase the degree of design freedom in the vehicle rear portion while ensuring a distance from the rear suspension 26 to the anti-vibration link 24.

In the preferred embodiment, the body frame 2 has a reduced size in the front-rear direction and the rear end 2r of the body frame 2 is arranged at a position further to the front than the rotation center C1 of the rear wheel Rw. Since the rear end 2r of the body frame 2 is thus moved forward, the structure of the vehicle rear portion is less likely to be limited not only by the rear suspension 26 but also by the body frame 2. It is therefore possible to further increase the degree of design freedom in the vehicle rear portion.

In the preferred embodiment, the rear end 2r of the body frame 2 has a lowered position and the rear end 2r of the body frame 2 is arranged below the lower end 3L of the head pipe 3 in a side view. If the rear end 2r of the body frame 2 has a raised position, the seat 11 and/or the carrier bed accordingly have a raised position. If the rear end 2r of the body frame 2 has a lowered position, the height of the seat 11 and/or the carrier bed is less likely to be limited by the rear end 2r of the body frame 2. It is therefore possible to increase the degree of design freedom in the vehicle rear portion.

In the preferred embodiment, the rear wheel Rw is arranged between the rear arm 25 and the transmission mechanism 23 in the vehicle width direction. The rear arm 25 is linked to the swing unit 21. The rear arm 25 extends rearward to at least the axle 72 supporting the rear wheel Rw. The lower mount bracket 102 of the rear suspension 26 is attached to the rear arm 25. It is therefore possible to arrange the lower mount bracket 102 at any position within the range from the swing unit 21 to the axle 72.

In the preferred embodiment, the upper mount bracket 101 is arranged at a position further to the front than the front end Rf of the rear wheel Rw in a side view, and at least a portion of the upper mount bracket 101 is arranged at a position further to the rear than the pivot axis Ap1 of the anti-vibration link 24 in a side view. In this case, if the inclination angle of the rear suspension 26 with respect to the horizontal plane is small, the extended line Le of the rear suspension 26 does not intersect with the seating surface 11s of the seat 11 in a side view. Thus, it is possible to increase the inclination angle of the rear suspension 26 with respect to the horizontal plane and thus to effectively reduce the vertical vibration of the body frame 2.

In the preferred embodiment, the upper mount bracket 101 is arranged at a position further to the front than the front end Rf of the rear wheel Rw in a side view, and at least a portion of the upper mount bracket 101 is arranged at a position further to the rear than the rotation axis Ac of the crank shaft 55 in a side view. In this case, if the inclination angle of the rear suspension 26 with respect to the horizontal plane is small, the extended line Le of the rear suspension 26 does not intersect with the seating surface 11s of the seat 11 in a side view. Thus, it is possible to increase the inclination angle of the rear suspension 26 with respect to the horizontal plane and thus to effectively reduce the vertical vibration of the body frame 2.

In the preferred embodiment, the shroud 79 is arranged further outward than the cooling fan 78 in the vehicle width direction and overlaps at least a portion of the cooling fan 78 in a side view. The rear suspension 26 does not overlap the shroud 79 in a side view. In other words, no portion of the rear suspension 26 is arranged outward of the shroud 79 in the vehicle width direction and thus the rear suspension 26 and the shroud 79 are not arranged in the vehicle width direction. It is therefore possible to prevent the straddled vehicle 1 from having an increased maximum width.

In the preferred embodiment, the flat surface 44s on which the feet of the rider are to be placed is provided for the straddled vehicle 1. The flat surface 44s extends from the right end of the straddled vehicle 1 to the left end of the straddled vehicle 1 in the vehicle width direction. In this case, an underbone frame is used as the body frame 2. In general, it is difficult for the underbone frame to ensure rigidity and it tends to easily bend when a load is applied to it from the front of the straddled vehicle 1, as compared to other types of body frames such as a cradle frame used in sport-type motorcycles. Even with such a body frame 2, it is possible to effectively reduce the vibration to be transmitted to the rider with the rear suspension 26, as described above, and thus to minimize the deterioration in the ride comfort due to bending of the body frame 2.

### Other Preferred Embodiments

For example, the seat 11 may be attached to the body frame 2 via a member other than the storage box 12. Alternatively, the seat 11 may be attached directly to the body frame 2 instead of being attached to the body frame 2 via an intermediate member such as the storage box 12.

The straddled vehicle 1 may further include a carrier bed or a carrier box arranged over the rear wheel Rw. In this case, the carrier bed or the carrier box may be attached to the body frame 2 via an intermediate member such as the storage box 12 or may be attached directly to the body frame 2.

The straddled vehicle 1 may include two rear suspensions 26 arranged, respectively, to the right and left of the vehicle center WO.

At least a portion of the upper mount bracket 101 of the rear suspension 26 may be arranged above the lower end 3L of the head pipe 3 in a side view.

At least a portion of the upper mount bracket 101 of the rear suspension 26 may be arranged at a position further to the rear than the rear end 73r of the crank case 73.

At least a portion of the upper mount bracket 101 of the rear suspension 26 may be arranged at a position further to the front than the pivot axis Ap2 in a side view. In this case, at least a portion of the upper mount bracket 101 may be arranged between the pivot axis Ap1 and the pivot axis Ap2 in the front-rear direction in a side view or may be arranged at a position further to the front than the pivot axis Ap1 in a side view.

At least a portion of the upper mount bracket 101 of the rear suspension 26 may be arranged at a position further to the front than the rotation axis Ac of the crank shaft 55 in a side view.

At least a portion of the lower mount bracket 102 of the rear suspension 26 may be arranged at a position further to the rear than the axle 72 in a side view.

At least a portion of the lower mount bracket 102 of the rear suspension 26 may be arranged at a position further to the front than the front end Rf of the rear wheel Rw in a side view.

The lower mount bracket 102 of the rear suspension 26 may be entirely arranged above the rotation axis Ac of the crank shaft 55 in a side view.

At least a portion of the lower mount bracket 102 of the rear suspension 26 may be arranged above the upper surface 74s of the CVT case 74 in a side view.

The rear suspension 26 may not overlap the rear wheel Rw in a side view. That is, the rear suspension 26 may be entirely arranged at a position further to the front than the front end Rf of the rear wheel Rw in a side view.

The rear suspension 26 may overlap a rotor other than the cooling fan 78 in a plan view. For example, the rear suspension 26 may overlap the generator 77, which is another example of the rotor, in a plan view. The generator 77 and the cooling fan 78 are coaxial with the crank shaft 55 and rotate together with the crank shaft 55 about the rotation axis Ac of the crank shaft 55.

The rear suspension 26 may overlap the shroud 79 in a side view.

The rear end 2r of the body frame 2 may be arranged at a position further to the rear than the rotation center C1 of the rear wheel Rw. The rear end 2r of the body frame 2 may be arranged above the lower end 3L of the head pipe 3.

The straddled vehicle 1 may be a motorcycle other than a scooter as long as the swing unit 21 is provided for the straddled vehicle 1. The straddled vehicle 1 may also be a vehicle including three or more wheels.

Two or more arrangements among all the arrangements described above may be combined.

### REFERENCE SIGNS LIST

1: Straddled vehicle, 2: Body frame, 2r: Rear end of body frame, 3: Head pipe, 3L: Lower end of head pipe, 11: Seat, 11s: Seating surface, 13: Steering device, 14: Steering handle, 15: Steering shaft, 21: Swing unit, 22: Engine, 23: Transmission mechanism, 24: Anti-vibration link, 25: Rear arm, 26: Rear suspension, 44s: Flat surface, 72: Axle, 79: Shroud, 101: Upper mount bracket, 102: Lower mount bracket, 103: Hydraulic damper, Ap1: Pivot axis, Ap2: Pivot axis, Le: Extended line of rear suspension, Ls: Center line of rear suspension, Rf: Front end of rear wheel, Rr: Rear end of rear wheel

## Claims

1. A straddled vehicle (1) comprising:
a body frame (2);
a rear wheel (Rw) in contact with a road surface (Rs);
a seat (11) including a seating surface (11s) to be in contact with a rider;
a swing unit (21) including an engine (22) that includes a crank shaft (55) rotatable about a rotation axis (Ac) and a transmission mechanism (23) at least partially arranged to the right or left of the rear wheel (Rw) and arranged to transmit power of the engine (22) to the rear wheel (Rw), the swing unit (21) vertically swingable with respect to the body frame (2) and supporting the rear wheel (Rw);
an anti-vibration link (24) arranged under the engine (22) and linking the swing unit (21) to the body frame (2) so that the swing unit (21) is vertically swingable with respect to the body frame (2); and
a rear suspension (26) including an upper mount bracket (101) linked to the body frame (2) and a lower mount bracket (102) arranged at a position further to the rear than the upper mount bracket (101) and linked to the swing unit (21), wherein
the rear suspension (26) is arranged on a side opposite to the transmission mechanism (23) with respect to the rear wheel (Rw) in a vehicle width direction,
the upper mount bracket (101) of the rear suspension (26) is arranged at a position further to the front than a front end (Rf) of the rear wheel (Rw) in a vehicle side view,
an extended line (Le) of a center line (Ls) of the rear suspension (26) intersects with the road surface (Rs) at a position further to the rear than the front end (Rf) of the rear wheel (Rw) in a vehicle side view, **characterized in that**
the straddled vehicle (1) comprises a rotor (77, 78) rotatable together with the crank shaft (55) about the rotation axis (Ac) of the crank shaft (55), wherein
the extended line (Le) of the center line (Ls) of the rear suspension (26) intersects with the road surface (Rs) at a position further to the front than a rear end (Rr) of the rear wheel (Rw) in a vehicle side view,
the extended line (Le) of the center line (Ls) of the rear suspension (26) intersects with the seating surface (11s) of the seat (11) in a vehicle side view, and
at least a portion of the rear suspension (26) is arranged above the rotor (77, 78) and overlaps the rotor (77, 78) in a vehicle plan view.

2. The straddled vehicle (1) according to claim 1, **characterized by** an axle (72) interposed between the rear wheel (Rw) and the swing unit (21) and supporting the rear wheel (Rw), wherein
the lower mount bracket (102) of the rear suspension (26) is arranged at a position further to the front than the axle (72) in a vehicle side view.

3. The straddled vehicle (1) according to claim 1 or 2, **characterized by** a steering handle (14) to be operated by the rider on the seat (11) and a steering shaft (15) arranged to rotate together with the steering handle (14), wherein
the body frame (2) includes a head pipe (3) in which the steering shaft (15) is inserted, and
the upper mount bracket (101) of the rear suspension (26) is arranged below a lower end (3L) of the head pipe (3) in a vehicle side view.

4. The straddled vehicle (1) according to any one of claims 1 to 3, **characterized in that**
the engine (22) includes a crank case (73) housing the crank shaft (55) therein and arranged in front of the rear wheel (Rw), and
the upper mount bracket (101) of the rear suspension (26) is arranged at a position further to the front than a rear end (73r) of the crank case (73).

5. The straddled vehicle (1) according to any one of claims 1 to 4, **characterized in that** the lower mount bracket (102) of the rear suspension (26) is arranged at a position further to the rear than the front end (Rf) of the rear wheel (Rw) in a vehicle side view.

6. The straddled vehicle (1) according to any one of claims 1 to 5, **characterized in that**
the upper mount bracket (101) of the rear suspension (26) is arranged above the rotation axis (Ac) of the crank shaft (55) in a vehicle side view, and
at least a portion of the lower mount bracket (102) of the rear suspension (26) is arranged below the rotation axis (Ac) of the crank shaft (55) in a vehicle side view.

7. The straddled vehicle (1) according to any one of claims 1 to 6, **characterized in that** the transmission mechanism (23) includes a CVT (62) arranged to transmit power of
the engine (22) toward the rear wheel (Rw) while changing a speed of rotation transmitted from the engine (22) and a CVT case (74) housing the CVT (62) therein, and
the lower mount bracket (102) of the rear suspension (26) is arranged below an upper surface (74s) of the CVT case (74) in a vehicle side view.

8. The straddled vehicle (1) according to any one of claims 1 to 7, **characterized in that** the rear suspension (26) overlaps the rear wheel (Rw) in a vehicle side view.

9. The straddled vehicle (1) according to any one of claims 1 to 8, **characterized in that** a rear end (2r) of the body frame (2) is arranged at a position further to the front than the rotation center of the rear wheel (Rw).

10. The straddled vehicle (1) according to any one of claims 1 to 9, **characterized by** a steering handle (14) to be operated by the rider on the seat (11) and a steering shaft (15) arranged to rotate together with the steering handle (14), wherein
the body frame (2) includes a head pipe (3) in which the steering shaft (15) is inserted, and
a rear end (2r) of the body frame (2) is arranged below a lower end (3L) of the head pipe (3) in a vehicle side view.

11. The straddled vehicle (1) according to any one of claims 1 to 10, **characterized by** a rear arm (25) arranged on a side opposite to the transmission mechanism (23) with respect to the rear wheel (Rw) in the vehicle width direction, supporting the rear wheel (Rw), and linked to the swing unit (21), wherein
the rear suspension (26) is linked to the swing unit (21) via the rear arm (25).

12. The straddled vehicle (1) according to any one of claims 1 to 11, **characterized in that** the anti-vibration link (24) links the swing unit (21) to the body frame (2) so that the swing unit (21) is vertically swingable with respect to the body frame (2) about a horizontal pivot axis (Ap1, Ap2) that is orthogonal to a front-rear direction, and
at least a portion of the upper mount bracket (101) of the rear suspension (26) is arranged at a position further to the rear than the pivot axis (Ap1, Ap2) in a vehicle side view.

13. The straddled vehicle (1) according to any one of claims 1 to 12, **characterized in that** at least a portion of the upper mount bracket (101) of the rear suspension (26) is arranged at a position further to the rear than the rotation axis (Ac) of the crank shaft (55) in a vehicle side view.

14. The straddled vehicle (1) according to any one of claims 1 to 13, **characterized by** a shroud (79) arranged further outward than the rotor (77, 78) in the vehicle width direction and overlapping at least a portion of the rotor (77, 78) in a vehicle side view, wherein
the rear suspension (26) does not overlap the shroud (79) in a vehicle side view.

15. The straddled vehicle (1) according to any one of claims 1 to 14, **characterized by** a flat surface (44s) extending from a right end of the straddled vehicle (1) to a left end of the straddled vehicle (1) in the vehicle width direction, on which the feet of the rider on the seat (11) are to be placed.

## Patentansprüche

1. Ein Spreiz-Sitz-Fahrzeug (1), das umfasst:
einen Körperrahmen (2);
ein Hinterrad (Rw) in Kontakt mit einer Fahrbahnoberfläche (Rs);
einen Sitz (11), der eine Sitzfläche (11s) beinhaltet, um in Kontakt mit einem Fahrer zu sein;
eine Schwingeinheit (21), die einen Motor (22) beinhaltet, der eine Kurbelwelle (55), die um eine Drehachse (Ac) drehbar ist, und einen Getriebemechanismus (23), der zumindest teilweise rechts oder links von dem Hinterrad (Rw) angeordnet ist und Leistung des Motors (22) auf das Hinterrad (Rw) überträgt, beinhaltet, die Schwingeinheit (21) ist in Bezug auf den Körperrahmen (2) vertikal schwenkbar und lagert das Hinterrad (Rw);
eine Antivibrationsverbindung (24), die unter dem Motor (22) angeordnet ist und die Schwingeinheit (21) mit dem Körperrahmen (2) verbindet, so dass die Schwingeinheit (21) in Bezug auf den Körperrahmen (2) vertikal schwenkbar ist; und
eine hintere Aufhängung (26), die eine oberen Montageklammer (101), die mit dem Körperrahmen (2) verbunden ist, und einer unteren Montageklammer (102), die an einer weiter hinten liegenden Position als die obere Montageklammer (101) angeordnet und mit der Schwingeinheit (21) verbunden ist, beinhaltet, wobei
die hintere Aufhängung (26) auf einer Seite angeordnet ist, die dem Getriebemechanismus (23) in Bezug auf das Hinterrad (Rw) in einer Fahrzeugbreitenrichtung gegenüberliegt,
die obere Montageklammer (101) der hinteren Aufhängung (26) an einer Position angeordnet ist, die weiter vorne liegt als ein vorderes Ende (Rf) des Hinterrads (Rw) in einer Fahrzeugseitenansicht,
eine verlängerte Linie (Le) einer Mittellinie (Ls) der hinteren Aufhängung (26) die Fahrbahnoberfläche (Rs) an einer Position schneidet, die weiter hinten liegt als das vordere Ende (Rf) des Hinterrades (Rw) in einer Fahrzeugseitenansicht, **dadurch gekennzeichnet, dass**
das Spreiz-Sitz-Fahrzeug (1) einen Rotor (77, 78) aufweist, der zusammen mit der Kurbelwelle (55) um die Drehachse (Ac) der Kurbelwelle (55) drehbar ist, wobei
die verlängerte Linie (Le) der Mittellinie (Ls) der hinteren Aufhängung (26) die Fahrbahnoberfläche (Rs) an einer Stelle schneidet, die weiter vorne liegt als ein hinteres Ende (Rr) des Hinterrads (Rw) in einer Fahrzeugseitenansicht,
die verlängerte Linie (Le) der Mittellinie (Ls) der hinteren Aufhängung (26) sich mit der Sitzfläche (11s) des Sitzes (11) in einer Fahrzeugseitenansicht schneidet, und
zumindest ein Teil der hinteren Aufhängung (26) oberhalb des Rotors (77, 78) angeordnet ist und den Rotor (77, 78) in einer Fahrzeugdraufsicht überlappt.

2. Das Spreiz-Sitz-Fahrzeug (1) gemäß Anspruch 1, **gekennzeichnet durch** eine Achse (72), die zwischen dem Hinterrad (Rw) und der Schwingeinheit (21) angeordnet ist und das Hinterrad (Rw) lagert, wobei
die untere Montageklammer (102) der hinteren Aufhängung (26) weiter vorne angeordnet ist als die Achse (72) in einer Fahrzeugseitenansicht.

3. Das Spreiz-Sitz-Fahrzeug (1) gemäß Anspruch 1 oder 2, **gekennzeichnet durch** eine Lenkstange (14), die vom Fahrer auf dem Sitz (11) zu betätigen ist, und eine Lenkwelle (15), die angeordnet ist, um zusammen mit der Lenkstange (14) zu drehen, wobei
der Körperrahmen (2) ein Kopfrohr (3), in das die Lenkwelle (15) eingesetzt ist, beinhaltet, und
die obere Montageklammer (101) der hinteren Aufhängung (26) unterhalb eines unteren Endes (3L) des Kopfrohrs (3) in einer Fahrzeugseitenansicht angeordnet ist.

4. Das Spreiz-Sitz-Fahrzeug (1) gemäß irgendeinem der Ansprüche 1 bis 3, **dadurch gekennzeichnet, dass** der Motor (22) ein Kurbelgehäuse (73) beinhaltet, in dem die Kurbelwelle (55) untergebracht ist und das vor dem Hinterrad (Rw) angeordnet ist, und
die obere Montageklammer (101) der hinteren Aufhängung (26) an einer Position angeordnet ist, die weiter vorne liegt als ein hinteres Ende (73r) des Kurbelgehäuses (73).

5. Das Spreiz-Sitz-Fahrzeug (1) gemäß irgendeinem der Ansprüche 1 bis 4, **dadurch gekennzeichnet, dass** die untere Montageklammer (102) der hinteren Aufhängung (26) weiter hinten angeordnet ist als das vordere Ende (Rf) des Hinterrads (Rw) in einer Fahrzeugseitenansicht.

6. Das Spreiz-Sitz-Fahrzeug (1) gemäß irgendeinem der Ansprüche 1 bis 5, **dadurch gekennzeichnet, dass** die obere Montageklammer (101) der hinteren Aufhängung (26) oberhalb der Drehachse (Ac) der Kurbelwelle (55) in einer Fahrzeugseitenansicht angeordnet ist, und
zumindest ein Abschnitt der unteren Montageklammer (102) der hinteren Aufhängung (26) unterhalb der Drehachse (Ac) der Kurbelwelle (55) in einer Fahrzeugseitenansicht angeordnet ist.

7. Das Spreiz-Sitz-Fahrzeug (1) gemäß irgendeinem der Ansprüche 1 bis 6, **dadurch gekennzeichnet, dass** der Getriebemechanismus (23) ein CVT-Getriebe (62), das angeordnet ist, um Leistung des Motors (22) auf das Hinterrad (Rw) zu übertragen, während es die Drehzahl, die von dem Motor (22) übertragen ist, ändert, und ein CVT-Gehäuse (74), in dem das CVT-Getriebe (62) untergebracht ist, beinhaltet, und die untere Montageklammer (102) der hinteren Aufhängung (26) unterhalb einer oberen Flache (74s) des CVT-Gehäuses (74) in einer Fahrzeugseitenansicht angeordnet ist.

8. Das Spreiz-Sitz-Fahrzeug (1) gemäß irgendeinem der Ansprüche 1 bis 7, **dadurch gekennzeichnet, dass** die hintere Aufhängung (26) das Hinterrad (Rw) in einer Fahrzeugseitenansicht überlappt.

9. Das Spreiz-Sitz-Fahrzeug (1) gemäß irgendeinem der Ansprüche 1 bis 8, **dadurch gekennzeichnet, dass** ein hinteres Ende (2r) des Körperrahmens (2) an einer Position angeordnet ist, die weiter vorne liegt als der Drehpunkt des Hinterrades (Rw).

10. Das Spreiz-Sitz-Fahrzeug (1) gemäß irgendeinem der Ansprüche 1 bis 9, **gekennzeichnet durch** eine Lenkstange (14), die vom Fahrer auf dem Sitz (11) zu betätigen ist, und eine Lenkwelle (15), die angeordnet ist, um zusammen mit der Lenkstange (14) zu drehen, wobei
der Körperrahmen (2) ein Kopfrohr (3) aufweist, in das die Lenkwelle (15) eingesetzt ist, und
ein hinteres Ende (2r) des Körperrahmens (2) unterhalb eines unteren Endes (3L) des Kopfrohrs (3) in einer Fahrzeugseitenansicht angeordnet ist.

11. Das Spreiz-Sitz-Fahrzeug (1) gemäß irgendeinem der Ansprüche 1 bis 10, **gekennzeichnet durch** einen hinteren Arm (25), der auf einer Seite, die dem Getriebemechanismus (23) in Bezug auf das Hinterrad (Rw) in Fahrzeugbreitenrichtung gegenüberliegt, angeordnet ist, das Hinterrad (Rw) lager und mit der Schwingeinheit (21) verbunden ist, wobei
die hintere Aufhängung (26) über den hinteren Arm (25) mit der Schwingeinheit (21) verbunden ist.

12. Das Spreiz-Sitz-Fahrzeug (1) gemäß irgendeinem der Ansprüche 1 bis 11, **dadurch gekennzeichnet, dass** die Antivibrationsverbindung (24) die Schwingeinheit (21) mit dem Körperrahmen (2) verbindet, so dass die Schwingeinheit (21) in Bezug auf den Körperrahmen (2) um eine horizontale Schwenkachse (Ap1, Ap2), die orthogonal zu einer Vorne-Hinten-Richtung ist, vertikal schwenkbar ist, und
zumindest ein Teil der oberen Montageklammer (101) der hinteren Aufhängung (26) in einer Position angeordnet ist, die weiter hinten liegt als die Schwenkachse (Ap1, Ap2) in einer Fahrzeugseitenansicht.

13. DasSpreiz-Sitz-Fahrzeug (1) gemäß irgendeinem der Ansprüche 1 bis 12, **dadurch gekennzeichnet, dass** zumindest ein Teil der oberen Montageklammer (101) der hinteren Aufhängung (26) in einer Position angeordnet ist, die weiter hinten liegt als die Drehachse (Ac) der Kurbelwelle (55) in einer Fahrzeugseitenansicht.

14. Das Spreiz-Sitz-Fahrzeug (1) gemäß irgendeinem der Ansprüche 1 bis 13, **gekennzeichnet durch** eine Abdeckhaube (79), die weiter außen als der Rotor (77, 78) in Fahrzeugbreitenrichtung angeordnet ist und in einer Fahrzeugseitenansicht zumindest einen Teil des Rotors (77, 78) überdeckt, wobei
die hintere Aufhängung (26) in der Fahrzeugseitenansicht nicht mit der Abdeckhaube (79) überlappt.

15. Das Spreiz-Sitz-Fahrzeug (1) gemäß irgendeinem der Ansprüche 1 bis 14, **gekennzeichnet durch** eine ebene Fläche (44s), die sich von einem rechten Ende des Spreiz-Sitz-Fahrzeugs (1) bis zu einem linken Ende des Spreiz-Sitz-Fahrzeugs (1) in der Fahrzeugbreitenrichtung erstreckt und auf der die Füße des Fahrers auf dem Sitz (11) abzustellen sind.

## Revendications

1. Véhicule à selle (1) comprenant :
un cadre (2),
une roue arrière (Rw) en contact avec la surface d'une (Rs),
un siège (11) incluant une surface d'assise (11s) à mettre en contact avec un pilote,
une unité pivotante (21) incluant un moteur thermique (22) qui inclut un vilebrequin (55) pouvant tourner autour d'un axe de rotation (Ac), ainsi qu'un mécanisme de transmission (23) au moins disposé partiellement à la droite ou à la gauche de la roue arrière (Rw) et disposé pour transmettre la puissance du moteur (22) à la roue arrière (Rw), l'unité pivotante (21) pouvant osciller verticalement par rapport au cadre (2) et supportant la roue arrière (Rw),
une liaison anti vibration (24) disposée sous le moteur (22) et reliant l'unité pivotante (21) au cadre (2) de sorte à ce que l'unité pivotante (21) puisse osciller verticalement par rapport au cadre (2), et
une suspension arrière (26) incluant un support de montage supérieur (101) relié au cadre (2) et un support de montage inférieur (102) disposé à une position plus à l'arrière que le support de montage supérieur (101) et reliée à l'unité pivotante (21), où
la suspension arrière (26) est disposée sur un côté opposé au mécanisme de transmission (23) par rapport à la roue arrière (Rw) dans la direction de la largeur du véhicule,
le support de montage supérieur (101) de la suspension arrière (26) est disposé à une position plus à l'avant que l'extrémité avant (Rf) de la roue arrière (Rw) dans une vue latérale du véhicule,
la droite étendue (Le) de l'axe central (Ls) de la suspension arrière (26) coupe la surface de la route (Rs) à une position plus vers l'arrière que l'extrémité avant (Rf) de la roue arrière (Rw) dans une vue latérale du véhicule, **caractérisé en ce que** :
le véhicule à selle (1) comprend un rotor (77, 78) pouvant tourner en même temps que le vilebrequin (55) autour de l'axe de rotation (Ac) du vilebrequin (55), où
la droite étendue (Le) de l'axe central (Ls) de la suspension arrière (26) coupe la surface de la route (Rs) à une position plus éloignée vers l'avant que l'extrémité arrière (Rr) de la roue arrière (Rw) dans une vue latérale du véhicule,
la droite étendue (Le) de l'axe central (Ls) de la suspension arrière (26) coupe la surface d'assise (11s) du siège (11) dans une vue latérale du véhicule, et
au moins une partie de la suspension arrière (26) est disposée au-dessus du rotor (77, 78) et chevauche le rotor (77, 78) dans une vue en plan du véhicule.

2. Véhicule à selle (1) selon la revendication 1, **caractérisé par** un essieu (72) intercalé entre la roue arrière (Rw) et l'unité pivotante (21) et supportant la roue arrière (Rw), où
le support de montage inférieur (102) de la suspension arrière (26) est disposé à une position plus vers l'avant que l'essieu (72) dans une vue latérale du véhicule.

3. Véhicule à selle (1) selon la revendication 1 ou la revendication 2, **caractérisé par** un guidon (14) à manoeuvrer par le pilote sur le siège (11) et un arbre de direction (15) disposé pour tourner en même temps que le guidon (14), où
le cadre (2) inclut un tube de fourche (3) dans lequel est inséré l'arbre de direction (15), et
le support de montage supérieur (101) de la suspension arrière (26) est disposé en dessous de l'extrémité inférieure (3L) du tube de fourche (3) dans une vue latérale du véhicule.

4. Véhicule à selle (1) selon l'une quelconque des revendications 1 à 3, **caractérisé en ce que** le moteur (22) inclut un carter moteur (73) accueillant le vilebrequin (55) et disposé en avant de la roue arrière (Rw), et
le support de montage supérieur (101) de la suspension arrière (26) est disposé à une position plus vers l'avant que l'extrémité arrière (73r) du carter moteur (73).

5. Véhicule à selle (1) selon l'une quelconque des revendications 1 à 4, **caractérisé en ce que** le support de montage inférieur (102) de la suspension arrière (26) est disposé à une position plus vers l'arrière que l'extrémité avant (Rf) de la roue arrière (Rw) dans une vue latérale du véhicule.

6. Véhicule à selle (1) selon l'une quelconque des revendications 1 à 5, **caractérisé en ce que** le support de montage supérieur (101) de la suspension arrière (26) est disposé au-dessus de l'axe de rotation (Ac) du vilebrequin (55) dans une vue latérale du véhicule, et
au moins une partie du support de montage inférieur (102) de la suspension arrière (26) est disposée en dessous de l'axe de rotation (Ac) du vilebrequin (55) dans une vue latérale du véhicule.

7. Véhicule à selle (1) selon l'une quelconque des revendications 1 à 6, **caractérisé en ce que** le mécanisme de transmission (23) inclut une transmission CVT (62) disposée pour transmettre la puissance du moteur (22) vers la roue arrière (Rw) tout en changeant le régime de rotation transmis depuis le moteur (22), ainsi qu'un carter de transmission CVT (74) logeant la transmission CVT (62), et
le support de montage inférieur (102) de la suspension arrière (26) est disposé en dessous de la surface supérieure (74s) du carter de transmission CVT (74) dans une vue latérale du véhicule.

8. Véhicule à selle (1) selon l'une quelconque des revendications 1 à 7, **caractérisé en ce que** la suspension arrière (26) chevauche la roue arrière (Rw) dans une vue latérale du véhicule.

9. Véhicule à selle (1) selon l'une quelconque des revendications 1 à 8, **caractérisé en ce que** l'extrémité arrière (2r) du cadre (2) est disposée à une position plus vers l'avant que le centre de rotation de la roue arrière (Rw) .

10. Véhicule à selle (1) selon l'une quelconque des revendications 1 à 9, **caractérisé par** un guidon (14) à manoeuvrer par le pilote sur le siège (10) et un arbre de direction (15) disposé pour tourner en même temps que le guidon (14), où
le cadre (2) inclut un tube de fourche (3) dans lequel est inséré l'arbre de direction (15), et
l'extrémité arrière (2r) du cadre (2) est disposée en dessous de l'extrémité inférieure (3L) du tube de fourche (3) dans une vue latérale du véhicule.

11. Véhicule à selle (1) selon l'une quelconque des revendications 1 à 10, **caractérisé par** un bras arrière (25) disposé sur un côté opposé au mécanisme de transmission (23) par rapport à la roue arrière (Rw) dans la direction de la largeur du véhicule, supportant la roue arrière (Rw) et relié à l'unité pivotante (21), où
la suspension arrière (26) est reliée à l'unité pivotante (21) par l'intermédiaire du bras arrière (25)

12. Véhicule à selle (1) selon l'une quelconque des revendications 1 à 11, **caractérisé en ce que** la liaison anti vibration (24) relie l'unité pivotante (21) au cadre (2) de sorte à ce que l'unité pivotante (21) puisse osciller verticalement par rapport au cadre (2) autour d'un axe de pivot horizontal (Ap1, Ap2) qui est orthogonal à la direction avant arrière, et
au moins une partie du support de montage supérieur (101) de la suspension arrière (26) est disposée à une position plus vers l'arrière que l'axe de pivot horizontal (Ap1, Ap2) dans une vue latérale du véhicule.

13. Véhicule à selle (1) selon l'une quelconque des revendications 1 à 12, **caractérisé en ce qu'**au moins une partie du support de montage supérieur (101) de la suspension arrière (26) est disposée à une position plus vers l'arrière que l'axe de rotation (Ac) du vilebrequin (55) dans une vue latérale du véhicule.

14. Véhicule à selle (1) selon l'une quelconque des revendications 1 à 13, **caractérisé par** un carénage (79) disposé plus à l'extérieur que le rotor (77, 78) dans la direction de la largeur du véhicule et chevauchant au moins une partie du rotor (77, 78) dans une vue latérale du véhicule, où
la suspension arrière (26) ne chevauche pas le carénage (79) dans une vue latérale du véhicule.

15. Véhicule à selle (1) selon l'une quelconque des revendications 1 à 14, **caractérisé par** une surface plate (44s) s'étendant depuis l'extrémité droite du véhicule à selle (1) jusqu'à l'extrémité gauche du véhicule à selle (1) dans la direction de la largeur du véhicule sur laquelle doivent être placés les pieds du pilote sur le siège (11).
